(19) Europäisches Patentamt / European Patent Office / Office européen des brevets

(11) **EP 4 513 958 A1**

(12) **EUROPEAN PATENT APPLICATION**
published in accordance with Art. 153(4) EPC

(43) Date of publication:
**26.02.2025 Bulletin 2025/09**

(21) Application number: **23795093.6**

(22) Date of filing: **17.04.2023**

(51) International Patent Classification (IPC):
*H04W 28/26* (2009.01)

(52) Cooperative Patent Classification (CPC):
**H04W 28/26; H04W 72/1263**

(86) International application number:
**PCT/CN2023/088760**

(87) International publication number:
**WO 2023/207660 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210474683**

(71) Applicant: **Huawei Technologies Co., Ltd.
Shenzhen, Guangdong 518129 (CN)**

(72) Inventors:
 • **YANG, Fan
 Shenzhen, Guangdong 518129 (CN)**

 • **LI, Chao
 Shenzhen, Guangdong 518129 (CN)**
 • **HUANG, Haining
 Shenzhen, Guangdong 518129 (CN)**
 • **LI, Junyao
 Shenzhen, Guangdong 518129 (CN)**
 • **ZHANG, Tianhong
 Shenzhen, Guangdong 518129 (CN)**

(74) Representative: **Thun, Clemens
 Mitscherlich PartmbB
 Patent- und Rechtsanwälte
 Karlstraße 7
 80333 München (DE)**

(54) **RESOURCE DETERMINING METHOD AND APPARATUS**

(57) A resource determining method and an apparatus are provided. The method includes: A first terminal device determines first channel occupancy time COT reservation information of the first terminal device and one or more pieces of second channel occupancy time COT reservation information of a second terminal device. The first terminal device performs resource exclusion on a first COT candidate resource set based on the first COT reservation information and the one or more pieces of second COT reservation information, to obtain an updated first COT candidate resource set, where the updated first COT candidate resource set is used by the first terminal device and/or a third terminal device for sidelink transmission. Therefore, according to the method, a candidate resource of the first terminal device is determined, so that effective COT transmission is achieved, thereby improving a transmission rate of the sidelink transmission by the first terminal device.

S401: A first terminal device determines first channel occupancy time COT reservation information of the first terminal device and one or more pieces of second channel occupancy time COT reservation information of a second terminal device

S402: The first terminal device performs resource exclusion on a first COT candidate resource set based on the first COT reservation information and the one or more pieces of second COT reservation information, to obtain an updated first COT candidate resource set

S403: The first terminal device determines a plurality of updated first COT candidate resource sets, and uses an intersection set of the plurality of updated first COT candidate resource sets as a final first COT candidate resource set

FIG. 4

EP 4 513 958 A1

**Description**

**CROSS-REFERENCE TO RELATED APPLICATIONS**

This application claims priority to Chinese Patent Application No. 202210474683.9, filed with the China National Intellectual Property Administration on April 29, 2022 and entitled "RESOURCE DETERMINING METHOD AND APPARATUS", which is incorporated herein by reference in its entirety.

**TECHNICAL FIELD**

This application relates to the field of communication technologies, an d in particular, to a resource determining method and an apparatus.

**BACKGROUND**

In a 5th generation mobile communication technology (5th generation mobile communication technology, 5G) new radio (new radio, NR) system, there are two transmission modes (modes) for resource allocation by a terminal device on a sidelink (sidelink, SL). One is a base-station resource allocation mode 1 (mode 1), and the other is a terminal-device self-selection resource mode 2 (mode 2).

In the mode 1, a base station may centrally allocate resources based on a buffer status report (buffer status report, BSR) reported by the terminal device. In the mode 2, a transmitting-end terminal device may perform sensing on resources in a resource pool, and select, based on a sensing result, a resource from a resource selection window for communication. Currently, a common resource selection manner is that the transmitting-end terminal device needs to perform full sensing on all slots that belong to a sidelink resource pool and that are in a resource sensing window except a resource used by the transmitting-end terminal device to send data, and perform resource exclusion based on a sensing result. This may cause high computing overheads, and is not conducive to power saving. To reduce power overheads, a resource selection manner based on partial sensing (partial sensing) is further defined in conventional technologies. In this resource selection manner, the transmitting-end terminal device only needs to perform sensing on some sub-frames in the resource sensing window, and exclude corresponding resources based on a sensing result. Because resources to be sensed are reduced, power consumption of the transmitting-end terminal device is reduced.

Based on the mode 2, different terminal devices perform sensing on resources in the resource pool, to select a resource for communication. However, because the different terminal devices are usually at different locations or in different channel environments, it is difficult for each terminal device to effectively determine (select) a transmission resource, to achieve transmission of channel occupancy time (channel occupancy time, COT). Consequently, a transmission rate of the SL is low.

Therefore, a resource determining method urgently needs to be provided, so that a transmission resource of a terminal device can be determined, to achieve effective COT transmission. This improves the transmission rate of the sidelink transmission.

**SUMMARY**

A resource determining method and an apparatus are provided, which can determine a transmission resource of a terminal device, to achieve effective COT transmission. This improves a transmission rate of sidelink transmission.

According to a first aspect, an embodiment of this application provides a resource determining method. The method may be performed by a first terminal device, or may be performed by a processor on the first terminal device, or may be performed by a chip in which the processor is installed. This is not limited. The method specifically includes: The first terminal device determines first channel occupancy time COT reservation information of the first terminal device and one or more pieces of second channel occupancy time COT reservation information of a second terminal device. The first terminal device performs resource exclusion on a first COT candidate resource set based on the first COT reservation information and the one or more pieces of second COT reservation information, to obtain an updated first COT candidate resource set, where the updated first COT candidate resource set is used by the first terminal device and/or a third terminal device for sidelink transmission.

In a solution in this application, the first terminal device is used as an example. The first terminal device determines the first COT reservation information of the first terminal device and the one or more pieces of COT reservation information of the terminal device. The first terminal device may perform resource exclusion on the first COT candidate resource set based on the first COT reservation information and the one or more pieces of second COT reservation information, to obtain the updated first COT candidate resource set, where resources in the updated first COT candidate resource set are used by the first terminal device and/or the third terminal device for sidelink transmission. As can be learned from the above, in the method, in the first COT candidate resource set obtained by the first terminal device, the first terminal device further performs resource exclusion on the first COT candidate resource set based on the first COT reservation information of the first terminal device and the one or more pieces of second COT reservation information of the second terminal device, to obtain the updated first COT candidate resource set. In this application, a resource is reserved in a COT manner. Therefore, the resources in the updated first COT candidate resource set are used by the first terminal device for sidelink transmission, to ensure that effective COT transmission is achieved, and further ensure transmission continuity. This improves a transmission rate of the sidelink transmission by the first terminal device.

In the solution of this application, that the first terminal device determines first COT reservation information of the first terminal device and one or more pieces of COT reservation information of a second terminal device may include but is not limited to the following two implementations:

Manner 1: The first terminal device may obtain the first COT reservation information of the first terminal device and the one or more pieces of COT reservation information of the second terminal device.

For example, the first terminal device may obtain SCI information of the first terminal device and one or more pieces of SCI information of the second terminal device, that is, each piece of SCI information, or initialize COT reservation information that is of a corresponding terminal device and that is included in SCI of second COT transmission, for example, the SCI information of the first terminal device carries the first COT reservation information of the first terminal device, and SCI information of the second terminal device carries second COT reservation information of the second terminal device. Then, the first terminal device may decode each piece of SCI information and obtain COT reservation information from the SCI information.

Manner 2: The first terminal device may obtain resource information and/or data of COT transmission by the first terminal device, and one or more pieces of resource information and/or data of COT transmission by the terminal device, and then determine the first COT reservation information of the first terminal device based on the resource and/or data of the COT transmission by the first terminal device and determine second COT reservation information of each second terminal device based on resource information and/or data of COT transmission by the second terminal device.

Optionally, in this embodiment of this application, that the first terminal device performs exclusion on a first COT candidate resource set, to obtain an updated first COT candidate resource set may be specifically performed by a physical layer of the first terminal device. The updated first COT candidate resource set is reported to a higher layer of the first terminal device, for example, a medium access control (medium access control, MAC) layer.

It should be noted that the first terminal device in this application may be any one of a plurality of terminal devices in a current communication system. Each terminal device in the communication system may perform resource selection (determining) with reference to the manner used by the first terminal device, to obtain a COT candidate resource for sidelink transmission, to improve a rate of the sidelink transmission.

In a possible implementation, the method further includes: The first terminal device determines the first COT candidate resource set. That the first terminal device determines the first COT candidate resource set includes: The first terminal device selects, from a resource selection window based on a preset time domain and a preset frequency domain, COT transmission resources that meet the preset time domain and the preset frequency domain as first COT candidate resources, to obtain the first COT candidate resource set. Specifically, the preset frequency domain and the preset time domain indicate a preset frequency domain resource and a preset time domain resource. For example, the preset frequency domain resource is one or more sub-channels or interlaces (interlaces), and the preset time domain resource is one or more slots.

In this implementation, the first terminal device may select the first COT candidate resources from transmission resources in the resource selection window based on a preset condition (to be specific, the preset time domain and the preset frequency domain), so that the first COT candidate resource set can be effectively obtained for sidelink transmission by the first terminal device.

In an example, in this embodiment of this application, the first COT candidate resource set may be represented by an initial value (the first COT candidate resource set may be indicated by an initial value). The first terminal device obtains the initial value, and may further update the initial value based on the first COT reservation information of the first terminal device and the one or more pieces of second COT reservation information of the second terminal device, to obtain an updated value. The updated value may indicate the updated first COT reservation resource set.

In a possible implementation, the second COT reservation information indicates resources for the second COT transmission, and the resources for the second COT transmission are used by the second terminal device and/or a plurality of fourth terminal devices for sidelink transmission.

In this implementation, the resources for the second COT transmission that correspond to the second reservation information can be accurately determined.

In this application, each of the one or more pieces of second COT reservation information may indicate resources for second COT transmission by a corresponding second terminal device. The resources for the second COT transmission are used by the second terminal device and/or the fourth terminal devices for sidelink transmission. For example, COT reservation information of a 1st second terminal device may indicate resources for second COT transmission by the 1st

second terminal device, and the resources for the second COT transmission are used by the 1st second terminal device and/or the plurality of fourth terminal devices (that is, terminal devices that can perform COT sharing with the 1st second terminal device) for sidelink transmission.

In a possible implementation, the first COT reservation information includes but is not limited to one or more of the following: resources for first COT transmission; a priority value of the first COT transmission; and a periodicity of the first COT transmission. The resources for the first COT transmission are used by the first terminal device and/or the one or more third terminal devices for sidelink transmission, the priority value of the first COT transmission is a smallest value in priority values of the transmission by the first terminal device and/or the one or more third terminal devices, and the periodicity of the first COT transmission is determined based on periodicities of the transmission by the first terminal device and/or the one or more third terminal devices. For example, the periodicity of the first COT transmission is a least common multiple of the periodicity of the transmission by the first terminal device and the periodicity of the transmission by the one or more third terminal devices. The priorities and/or periodicities of the transmission by the first terminal device and the one or more third terminal devices are carried in SCI.

In this implementation, the first terminal device may accurately determine the resources for the first COT transmission, and/or the priority value of the first COT transmission, and/or the periodicity of the first COT transmission based on the first COT reservation information, so that effective exclusion may be performed on the first COT candidate resource set more accurately, to obtain the updated first COT candidate resource set.

In a possible implementation, each piece of second COT reservation information includes but is not limited to one or more of the following: the resources for the second COT transmission; a priority value of the second COT transmission; and a periodicity of the second COT transmission. The priority value of the second COT transmission is a smallest value in priority values of the transmission by the second terminal device and/or the plurality of fourth terminal devices, and the periodicity of the second COT transmission is determined based on periodicities of the transmission by the second terminal device and/or the plurality of fourth terminal devices. For example, the periodicity of the second COT transmission is a least common multiple of the periodicity of the transmission by the second terminal device and the periodicity of the transmission by the one or more fourth terminal devices. The priorities and/or periodicities of transmission by the second terminal device and the one or more fourth terminal devices are carried in SCI.

In this implementation, the first terminal device may accurately determine, based on the second COT reservation information, the resources for the second COT transmission by the second terminal device, and/or the priority value of the second COT transmission, and/or the periodicity of the second COT transmission that correspond/corresponds to the second COT reservation information, so that effective exclusion may be performed on the first COT candidate resource set more accurately, to obtain the updated first COT candidate resource set.

In a possible implementation, that the first terminal device performs resource exclusion on a first COT candidate resource set based on the first COT reservation information and the one or more pieces of second COT reservation information, to obtain an updated first COT candidate resource set includes: The first terminal device excludes, based on the first COT reservation information and the one or more pieces of second COT reservation information, first COT candidate resources that meet a first condition from the first COT candidate resource set, to obtain the updated first COT candidate resource set.

In this implementation, the first terminal device may accurately exclude the first COT candidate resources based on the first condition, to obtain an updated first COT candidate resource set that is more effective. In this way, the first terminal device uses the updated first COT candidate resource set for sidelink transmission, to ensure transmission continuity. This improves a rate of the sidelink transmission by the first terminal device.

In a possible implementation, the first condition is any one or more of the following: A first reference signal received power (reference signal received power, RSRP) measurement value of the first COT candidate resource is greater than a first RSRP threshold, where the first RSRP measurement value of the first COT candidate resource is equal to a first RSRP measurement value of the second COT transmission, and the first RSRP measurement value of the second COT transmission is a largest value in RSRP measurement values of resources that are for the second COT transmission and that overlap with the first COT candidate resources, or the first RSRP measurement value of the second COT transmission is a largest value in RSRP measurement values of all the resources for the second COT transmission; and the first RSRP threshold is determined based on the priority value of the first COT transmission included in the first COT reservation information and the priority value of the second COT transmission included in the second COT reservation information. The first COT candidate resources overlap with transmission resources that are reserved by the one or more second terminal devices based on the periodicity corresponding to the second COT transmission. Transmission resources that are reserved from the first COT candidate resources based on the periodicity of the first COT transmission overlap with the transmission resources that are reserved by the one or more second terminal devices based on the periodicity corresponding to the second COT transmission.

Usually, RSRP is a key parameter that may represent radio signal strength in long term evolution (Long Term Evolution, LTE) and new radio (New Radio, NR) networks, and is one of physical layer measurement requirements. The RSRP is an average value of signal power received on all resource elements (resource elements, REs) that carry a reference signal in a symbol/slot.

The RSRP measurement values of the resources for the second COT transmission may be RSRP measurement values of resources that carry a demodulation reference signal DMRS and that are of a physical sidelink shared channel PSSCH or a PSCCH.

It should be noted that the first RSRP measurement value of the second COT transmission may also be a smallest value in the RSRP measurement values of all the resources for the second COT transmission. This is not specifically limited in this application, and may be set based on an actual situation.

In this implementation, the first terminal device may accurately know content of the first condition, and then accurately perform exclusion on the first COT candidate resource set based on the first condition, so that the updated first COT candidate resource set is used by the first terminal device for sidelink transmission. This can not only ensure an access success rate of the first terminal device, but also improve transmission efficiency of the first terminal device.

That the first terminal device excludes the first COT candidate resources based on the first condition, to obtain an updated first COT candidate resource set that is more accurate is a possible implementation of the solution of this application.

In the solution of this application, the first COT candidate resources may further be excluded in the following implementations, to obtain the updated first COT candidate resource set that is more accurate.

In a possible implementation, the second COT reservation information is for determining resources for third COT transmission, where the resources for the third COT transmission include: transmission resources that are in the resources for the second COT transmission and that overlap with the first COT candidate resources, and/or resources that are for the second COT transmission and on which transmission resources that are reserved from the resources for the second COT transmission based on the periodicity corresponding to the second COT transmission overlap with the transmission resources that are reserved from the first COT candidate resources based on the periodicity of the first COT transmission.

In this implementation, the resources for the third COT transmission that correspond to the second reservation information can be accurately determined.

In a possible implementation, the first COT reservation information is for determining resources for fourth COT transmission, where the resources for the fourth COT transmission include: first COT candidate resources that overlap with the resources for the second COT transmission, and first COT candidate resources on which the transmission resources that are reserved from the first COT candidate resources based on the periodicity of the first COT transmission overlap with the transmission resources that are reserved from the resources for the second COT transmission based on the periodicity corresponding to the second COT transmission.

In this implementation, the resources for the fourth COT transmission that correspond to the second reservation information can be accurately determined.

In a possible implementation, the second COT reservation information includes but is not limited to one or more of the following: the resources for the third COT transmission; and a second priority value of each transmission on the resources for the third COT transmission.

In this implementation, the first terminal device may accurately determine, based on the second COT reservation information, the resources for the third COT transmission and the second priority value of each transmission on the resources for third COT transmission, so that effective exclusion on the first COT candidate resource set may be performed more accurately, to obtain the updated first COT candidate resource set.

In a possible implementation, the first COT reservation information includes but is not limited to one or more of the following: the resources for the fourth COT transmission; and a first priority value of each transmission on the resources for the fourth COT transmission.

In this implementation, the first terminal device may accurately determine, based on the first COT reservation information, the resources for the fourth COT transmission and the second priority value of each transmission on the resources for third COT transmission, so that effective exclusion on the first COT candidate resource set may be performed more accurately, to obtain the updated first COT candidate resource set.

In a possible implementation, that the first terminal device performs resource exclusion on a first COT candidate resource set based on the first COT reservation information and the one or more pieces of second COT reservation information, to obtain an updated first COT candidate resource set includes: The first terminal device excludes, based on the first COT reservation information and the one or more pieces of second COT reservation information, first COT candidate resources that meet a second condition from the first COT candidate resource set, to obtain the updated first COT candidate resource set.

In this implementation, the first terminal device may accurately exclude the first COT candidate resources based on the second condition, to obtain an updated first COT candidate resource set that is more effective. In this way, the first terminal device uses the updated first COT candidate resource set for sidelink transmission, to ensure transmission continuity. This improves a rate of the sidelink transmission by the first terminal device.

In a possible implementation, the second condition includes: A second RSRP measurement value of any transmission resource in the resources for the fourth COT transmission is greater than a corresponding second RSRP threshold, where a second RSRP measurement value of each transmission resource in the resources for the fourth COT transmission is equal to a second RSRP measurement value of a corresponding transmission resource in the resources for the third COT transmission. The second RSRP threshold is determined based on a first priority value of one transmission included in the fourth COT transmission and a second priority value of one corresponding transmission included in the third COT transmission.

In this implementation, the first terminal device may accurately know content of the second condition, and then accurately perform exclusion on the first COT candidate resource set based on the second condition, so that the updated first COT candidate resource set is used by the first terminal device for sidelink transmission. This can not only ensure an access success rate of the first terminal device, but also improve transmission efficiency of the first terminal device.

In a possible implementation, the method further includes: The first terminal device determines a plurality of updated first COT candidate resource sets, where the plurality of updated first COT candidate resource sets are determined from the first COT candidate resources based on a plurality of COT lengths and corresponding COT transmission periodicities, and each updated first COT candidate resource set is determined from the first COT candidate resources based on one COT length and a corresponding COT transmission periodicity. The first terminal device uses an intersection set of the plurality of updated first COT candidate resource sets as the final first COT candidate resource set.

In this implementation, usually, when sending a transport resource block (transport block, TB), the first terminal device may send the transport block together with other TBs in different periodicities. In other words, the first terminal device needs to support different COT periodicities. In this case, the first terminal device may further determine a plurality of updated first COT candidate resource sets based on a plurality of preset COT lengths and corresponding COT transmission periodicities, so that the first terminal device uses an intersection set of the plurality of updated first COT candidate resource sets as a final first COT candidate resource set. This ensures that the first COT candidate resource set of the first terminal device can support reservation based on a plurality of periodicities.

In this embodiment of this application, the step in which the first terminal device performs exclusion on a first COT candidate resource set, to obtain an updated first COT candidate resource set, to further obtain a final first COT candidate resource set may be specifically performed by the physical layer of the first terminal device. Alternatively, the physical layer of the first terminal device reports one or more updated first COT candidate resource sets to the higher layer (for example, the MAC layer) of the first terminal device, and the higher layer of the first terminal device further performs exclusion on the one or more updated first COT candidate resource sets, to obtain the final first COT candidate resource set.

In addition to the foregoing implementation, in the solution of this application, the first terminal device may further perform exclusion on the first candidate resource set in an existing resource selection manner, that is, COT is not used as a granularity, to obtain an updated first candidate resource set, and finally exclude, from the updated first candidate resource set based on a COT length and a COT periodicity, a candidate resource that cannot be transmitted at the COT granularity, and report the updated first candidate resource set to the higher layer, for example, the MAC layer of the first terminal device.

For example, the first terminal device determines first reservation information of the first terminal device and one or more pieces of second reservation information of a second terminal device. The first terminal device performs resource exclusion on a first candidate resource set based on the first reservation information and the one or more pieces of second reservation information, to obtain an updated first candidate resource set, where the updated first candidate resource set is used by the first terminal device and/or a third terminal device for sidelink transmission.

For example, this includes but is not limited to the following two implementations.

In a first implementation, the first reservation information indicates resources for the first transmission, and the resources for the first transmission are used by the first terminal device and/or a plurality of fourth terminal devices for sidelink transmission.

The second reservation information indicates resources for second transmission, and the resources for the second transmission are used by the second terminal device and/or a plurality of fourth terminal devices for sidelink transmission. The second reservation information includes one or more of the following: the resources for the third transmission; and a second priority value of each transmission on the resources for the third transmission.

Further, the first terminal device excludes, based on the first reservation information and the one or more pieces of second reservation information, first candidate resources that meet a first condition from the first candidate resource set, to obtain the updated first candidate resource set.

The first condition includes: A second RSRP measurement value of any transmission resource in the resources for the fourth transmission is greater than a corresponding second RSRP threshold, where a second RSRP measurement value of each transmission resource in the resources for the fourth transmission is equal to a second RSRP measurement value of a corresponding transmission resource in the resources for the third transmission. The second RSRP threshold is determined based on a first priority value of one transmission included in the fourth transmission and a second priority value of one corresponding transmission included in the third transmission.

Finally, the first terminal device excludes, from the updated first candidate resource set based on a COT length and a COT periodicity, a candidate resource that cannot be used for transmission at a COT granularity, to obtain a final first COT candidate resource set, and reports the final first COT candidate resource set to the higher layer of the first terminal device.

In a second implementation, the first terminal device excludes, based on the first reservation information and the one or more pieces of second reservation information, first candidate resources that meet a second condition from the first candidate resource set, to obtain the updated first candidate resource set. This implementation may be implemented with reference to the foregoing first implementation, and details are not described herein again.

According to a second aspect, an embodiment of this application further provides a communication apparatus. The communication apparatus may be used in the first terminal device in the first aspect. The communication apparatus may be a terminal device, may be an apparatus (for example, a chip, a chip system, or a circuit) in the terminal device or a network device, or may be an apparatus that can be used with the terminal device or the network device. In a possible implementation, the communication apparatus may include modules or units in one-to-one correspondence with the methods/operations/steps/actions described in the first aspect. The modules or units may be implemented by a hardware circuit, software, or a communication of a hardware circuit and software. In a possible implementation, the communication apparatus may include a processing unit and a transceiver unit. The processing unit is configured to invoke the transceiver unit to perform a receiving function and/or a sending function.

In a possible implementation, the communication apparatus includes a transceiver unit and a processing unit. The processing unit is configured to: determine first channel occupancy time COT reservation information of the first terminal device and one or more pieces of second channel occupancy time COT reservation information of a second terminal device; and perform resource exclusion on a first COT candidate resource set based on the first COT reservation information and the one or more pieces of second COT reservation information, to obtain an updated first COT candidate resource set, where the updated first COT candidate resource set is used by the first terminal device and/or a third terminal device for sidelink transmission.

The processing unit is further configured to determine, by the first terminal device, the first COT candidate resource set.

When determining the first COT candidate resource set, the processing unit is specifically configured to: select, from a resource selection window based on a preset time domain and a preset frequency domain, all COT transmission resources that meet the preset time domain and the preset frequency domain as first COT candidate resources, to obtain the first COT candidate resource set.

In a possible implementation, the second COT reservation information indicates resources for second COT transmission, and the resources for the second COT transmission are used by the second terminal device and/or a plurality of fourth terminal devices for sidelink transmission.

In a possible implementation, the first COT reservation information includes one or more of the following: resources for first COT transmission; a priority value of the first COT transmission; and a periodicity of the first COT transmission. The resources for the first COT transmission are used by the first terminal device and/or the one or more third terminal devices for sidelink transmission, the priority value of the first COT transmission is a smallest value in priority values of the transmission by the first terminal device and/or the one or more third terminal devices, and the periodicity of the first COT transmission is determined based on periodicities of the transmission by the first terminal device and/or the one or more third terminal devices.

In a possible implementation, each piece of second COT reservation information includes but is not limited to one or more of the following: the resources for the second COT transmission; a priority value of the second COT transmission; and a periodicity of the second COT transmission. The priority value of the second COT transmission is a smallest value in priority values of the transmission by the second terminal device and/or the plurality of fourth terminal devices, and the periodicity of the second COT transmission is determined based on periodicities of the transmission by the second terminal device and/or the plurality of fourth terminal devices.

In a possible implementation, when performing resource exclusion on a first COT candidate resource set based on the first COT reservation information and the one or more pieces of second COT reservation information, to obtain an updated first COT candidate resource set, the processing unit is specifically configured to exclude, based on the first COT reservation information and the one or more pieces of second COT reservation information, first COT candidate resources that meet a first condition from the first COT candidate resource set, to obtain the updated first COT candidate resource set.

In a possible implementation, the first condition is any one or more of the following: A first RSRP measurement value of the first COT candidate resource is greater than a first RSRP threshold, where the first RSRP measurement value of the first COT candidate resource is equal to a first RSRP measurement value of the second COT transmission, and the first RSRP measurement value of the second COT transmission is a largest value in RSRP measurement values of resources that are for the second COT transmission and that overlap with the first COT candidate resources, or the first RSRP measurement value of the second COT transmission is a largest value in RSRP measurement values of all the resources for the second COT transmission; and the first RSRP threshold is determined based on the priority value of the first COT transmission included in the first COT reservation information and the priority value of the second COT transmission included in the second COT reservation information. The first COT candidate resources overlap with transmission resources that are reserved by the one or more second terminal devices based on the periodicity corresponding to the second COT transmission. Transmission resources that are reserved from the first COT candidate resources based on the periodicity of the first COT transmission overlap with the transmission resources that are reserved by the one or more second terminal devices based on the periodicity corresponding to the second COT transmission.

In a possible implementation, the second COT reservation information is for determining resources for third COT transmission, where the resources for the third COT transmission include: transmission resources that are in the resources for the second COT transmission and that overlap with the first COT candidate resources, and/or resources that are for the second COT transmission and on which transmission resources that are reserved from the resources for the second COT transmission based on the periodicity corresponding to the second COT transmission overlap with the transmission resources that are reserved from the first COT candidate resources based on the periodicity of the first COT transmission.

In a possible implementation, the first COT reservation information is for determining resources for fourth COT transmission, where the resources for the fourth COT transmission include: first COT candidate resources that overlap with the resources for the second COT transmission, and first COT candidate resources on which the transmission resources that are reserved from the first COT candidate resources based on the periodicity of the first COT transmission overlap with the transmission resources that are reserved from the resources for the second COT transmission based on the periodicity corresponding to the second COT transmission.

In a possible implementation, the second COT reservation information includes one or more of the following: the resources for the third COT transmission; and a second priority value of each transmission on the resources for the third COT transmission.

In a possible implementation, the first COT reservation information includes one or more of the following: the resources for the fourth COT transmission; and a first priority value of each transmission on the resources for the fourth COT transmission.

In a possible implementation, when performing resource exclusion on a first COT candidate resource set based on the first COT reservation information and the one or more pieces of second COT reservation information, to obtain an updated first COT candidate resource set, the processing unit is specifically configured to exclude, based on the first COT reservation information and the one or more pieces of second COT reservation information, first COT candidate resources that meet a second condition from the first COT candidate resource set, to obtain the updated first COT candidate resource set.

In a possible implementation, the second condition includes: A second RSRP measurement value of any transmission resource in the resources for the fourth COT transmission is greater than a corresponding second RSRP threshold, where a second RSRP measurement value of each transmission resource in the resources for the fourth COT transmission is equal to a second RSRP measurement value of a corresponding transmission resource in the resources for the third COT transmission. The second RSRP threshold is determined based on a first priority value of one transmission included in the fourth COT transmission and a second priority value of one corresponding transmission included in the third COT transmission.

In a possible implementation, the processing unit is further configured to: determine a plurality of updated first COT candidate resource sets, where the plurality of updated first COT candidate resource sets are determined from the first COT candidate resources based on a plurality of COT lengths and corresponding COT transmission periodicities, and each updated first COT candidate resource set is determined from the first COT candidate resources based on one COT length and a corresponding COT transmission periodicity; and use an intersection set of the plurality of updated first COT candidate resource sets as the final first COT candidate resource set.

According to a third aspect, an embodiment of this application provides a communication apparatus. The apparatus includes at least one processor and an interface circuit. The interface circuit is configured to provide input and/or output of a program or instructions for the at least one processor. The at least one processor is configured to execute the program or the instructions, so that the communication apparatus can implement the method provided in the first aspect or any possible implementation in the first aspect.

According to a fourth aspect, an embodiment of this application provides a computer storage medium. The storage medium stores a software program; and when the software program is read and executed by one or more processors, the method provided in the first aspect or any possible implementation in the first aspect may be implemented.

According to a fifth aspect, an embodiment of this application provides a computer program product including instructions. When the instructions are run on a computer, the computer is enabled to perform the method provided in the first aspect or any possible implementation in the first aspect.

According to a sixth aspect, an embodiment of this application provides a chip system, and the chip system includes a processor, configured to support a device in implementing functions involved in the first aspect.

In a possible implementation, the chip system further includes a memory. The memory is configured to store necessary program instructions and data. The chip system may include a chip, or may include a chip and another discrete component.

According to a seventh aspect, an embodiment of this application further provides a chip system. The chip system includes a processor and an interface. The interface is configured to obtain a program or instructions. The processor is configured to invoke the program or the instructions to implement or support a device in implementing functions involved in the first aspect, for example, determining or processing at least one of information and a set in the foregoing method.

In a possible implementation, the chip system further includes a memory. The memory is configured to store program instructions and data that are necessary for a terminal device. The chip system may include a chip, or may include a chip and another discrete component.

For technical effects that can be achieved in the second aspect to the seventh aspect or any possible implementation in the second aspect to the seventh aspect, refer to descriptions of technical effects that can be achieved in the first aspect or any possible implementation in the first aspect. Details are not described herein again.

## BRIEF DESCRIPTION OF DRAWINGS

FIG. 1 is a diagram of resource allocation in a self-selection resource mode 2;
FIG. 2 is a diagram of resource allocation based on periodic-based partial sensing;
FIG. 3A is a diagram of a communication system to which a method is applicable according to an embodiment of this application;
FIG. 3B is a diagram of a communication system to which a method is applicable according to an embodiment of this application;
FIG. 3C is a diagram of a communication system to which a method is applicable according to an embodiment of this application;
FIG. 3D is a diagram of a communication system to which a method is applicable according to an embodiment of this application;
FIG. 4 is a schematic flowchart of a resource determining method according to an embodiment of this application;
FIG. 5 is a diagram of a method procedure in a specific embodiment according to an embodiment of this application;
FIG. 6A is a diagram of resource transmission in a specific embodiment according to an embodiment of this application;
FIG. 6B is a diagram of resource transmission in a specific embodiment according to an embodiment of this application;
FIG. 6C is a diagram of resource transmission in a specific embodiment according to an embodiment of this application;
FIG. 6D is a diagram of resource transmission based on a service periodicity according to an embodiment of this application;
FIG. 6E is a diagram of resource transmission based on a COT periodicity according to an embodiment of this application;
FIG. 7A is a diagram of resource transmission according to an embodiment of this application;
FIG. 7B is another diagram of resource transmission according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a chip apparatus according to an embodiment of this application.

## DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

(1) A terminal device includes a device that provides data connectivity for a user. Specifically, the terminal device includes the device that provides data connectivity for the user, or includes the device that provides data connectivity for the user. For example, the terminal device may include a hand-held device with a wireless connection function or a processing device connected to a wireless modem. The terminal device may communicate with a core network via a radio access network (radio access network, RAN), and exchange data with the RAN, or interact data with the RAN. The terminal device may include a user equipment (user equipment, UE), a wireless terminal device, a mobile terminal device, a device-to-device (device-to-device, D2D) terminal device, a V2X terminal device, a machine-to-machine/-

machine-type communication (machine-to-machine/machine-type communication, M2M/MTC) terminal device, and an internet of things (internet of things, IoT) terminal device. Most typically, the terminal device may be a vehicle or a terminal-type road side unit, or a communication module or a chip built in the vehicle or the road side unit.

In embodiments of this application, direct communication between terminal devices through a PC5 interface is supported, that is, transmission over a sidelink is supported.

By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but is used to implement a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or mounted in the vehicle), the terminal devices may be all considered as vehicle-mounted terminal devices. For example, the vehicle-mounted terminal device is also referred to as an on board unit (on board unit, OBU).

In embodiments of this application, the terminal device may further include a relay (relay). Alternatively, it is understood that any device that can perform data communication with a base station may be considered as a terminal device.

In embodiments of this application, an apparatus configured to implement a function of the terminal device (for example, a first terminal device) may be the terminal device (for example, the first terminal device), or may be an apparatus, for example, a chip system, that can support the terminal device (for example, the first terminal device) in implementing the function. The apparatus may be installed in the terminal device (for example, the first terminal device) or may be used with the terminal device (for example, the first terminal device). In this embodiment of this application, the chip system may include a chip, or may include a chip and another discrete component.

(2) A network device includes, for example, an access network (access network, AN) device such as a base station (for example, an access point), and may be a device that communicates with a terminal device via an air interface through one or more cells in an access network. Alternatively, for example, a network device in a V2X technology is a road side unit (road side unit, RSU). The RSU may be a fixed infrastructure entity supporting a V2X application, and may exchange a message with another entity supporting the V2X application. The network device may include a next generation NodeB (next generation NodeB, gNB) in a 5th generation mobile communication technology (5th generation, 5G) new radio (new radio, NR) system (also referred to as an NR system for short), or may include a central unit (central unit, CU) and a distributed unit (distributed unit, DU) in a cloud radio access network (cloud radio access network, Cloud RAN) system. This is not limited in embodiments of this application.

The network device may further include a core network device, and the core network device includes, for example, an access and mobility management function (access and mobility management function, AMF). Because embodiments of this application mainly relate to the access network, the network device is an access network device in the following descriptions unless otherwise specified. A base station may represent the network device and/or the access network device below.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

(3) Sidelink (sidelink, SL) transmission is transmission (namely, communication) performed between terminal devices in this application.

In this application, a resource for sidelink communication is a resource that is scheduled by a base station and that is for sidelink transmission, or is a time-frequency resource that is in a resource pool and that is for the sidelink communication. The terminal device may perform sidelink sending on the resource. One resource may carry a physical sidelink control channel (physical sidelink control channel, PSCCH), a physical sidelink shared channel (physical sidelink shared channel, PSSCH), and a physical sidelink feedback channel (physical sidelink feedback channel, PSFCH), and/or carry a demodulation reference signal (demodulation reference signal, DMRS) and other signals. The reference signal may be carried on one or more resource elements (resource elements, REs), and the RE may occupy one symbol in time domain and occupy one subcarrier in frequency domain. A time domain scheduling unit of a sidelink resource is a slot, and a frequency domain scheduling unit of the sidelink resource is a sub-channel.

(4) Channel occupancy time (channel occupancy time, COT) is total time for which a terminal device accesses a channel according to a corresponding channel access procedure, and then the terminal device performs channel sharing or a plurality of terminal devices including the terminal device perform channel sharing. In the channel time, when it is determined that a transmission interval between different access devices is less than a preset threshold, LBT may not be performed or listen before talk (listen before talk, LBT) may be performed for short time.

On an unlicensed spectrum, when accessing an unlicensed channel, access devices (for example, base stations or terminal devices) that use different radio access technologies (radio access technologies, RATs) need to first perform clear channel assessment (clear channel assessment, CCA), for example, a listen before talk (listen before talk, LBT) mechanism. In this case, only after determining that the channel is idle, the access devices can use the channel for communication. In evolution of an NR sidelink technology, SL transmission supports only resource scheduling and reservation based on a single slot. If SL transmission is performed on the unlicensed spectrum, the terminal device is required to perform Type 1 LBT before each time of transmission, to check whether a channel is idle. In this case, the terminal device needs to access the channel for a plurality of times. Consequently, an overall transmission rate is reduced.

In a channel occupancy time (channel occupancy time, COT) transmission mechanism, one period of COT is a period of transmission time for which a channel can be continuously occupied by an access network device (for example, a base station or a terminal device) after the channel is occupied. In the channel time, when it is determined that a transmission interval between different access devices is less than a preset threshold, LBT may not be performed or LBT may be performed for short time. Therefore, a mechanism for transmission of COT is added to the SL transmission, so that a quantity of times of accessing a channel can be effectively reduced, to improve the overall transmission rate.

Meanings of "COT transmission" and "transmission of COT" in embodiments of this application are the same, and the two expressions may be mutually referenced.

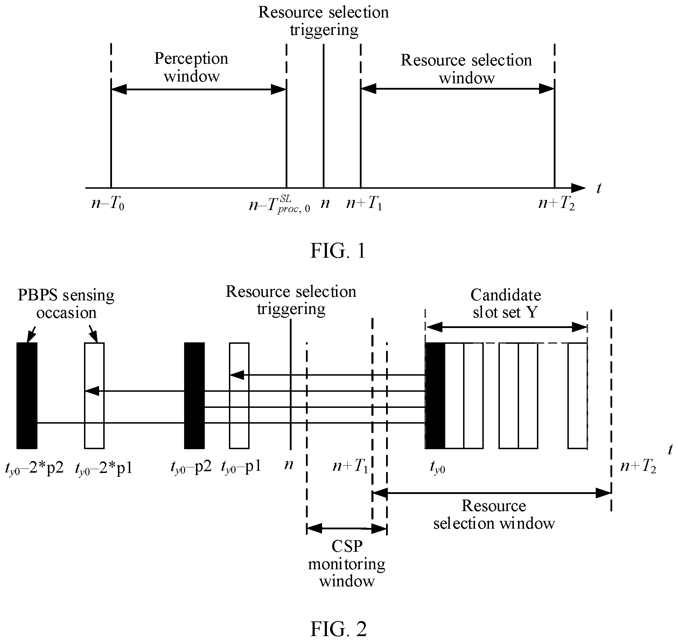

(5) A sensing window (sensing window) may also be referred to as a resource sensing window. In embodiments of this application, the sensing window may also be referred to as a monitoring window, a detection window, or a perception window. Refer to FIG. 1. The sensing window may be a of time resource before a slot n. Because a moment at which a first device needs to perform resource selection at a physical layer is in the slot n, a UE knows whether to perform resource selection only after the slot n arrives. Therefore, the first device continuously performs resource sensing, so that when the slot n arrives, the first device determines, based on a sensing result before the slot n, an appropriate transmission resource after the slot n. Optionally, the first device usually performs detection and analysis continuously based on a length of the sensing window.

(6) A selection window (selection window) may also be referred to as a resource selection window. Refer to FIG. 1. The selection window may be some or all time domain resources in a remaining PDB after a slot n. For brevity, the selection window may be described as a time period $[n + T_1, n + T_2]$, where $T_1$ is a non-negative constant, and $T_2$ is a constant that does not exceed the remaining PDB. A first device needs to determine a transmission resource for a to-be-transmitted TB in the selection window. Optionally, the first device also needs to send the to-be-transmitted TB in the selection window based on the determined transmission resource. Optionally, the first device determines a candidate or available resource set in the selection window and reports the resource set to a higher layer, and then the higher layer determines the transmission resource from the resource set. Optionally, a physical layer of the first device may directly determine the transmission resource based on the determined candidate or available resource set, and send the to-be-transmitted TB.

(7) Terms "system" and "network" may be used interchangeably in embodiments of this application. "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are used to distinguish between a plurality of objects, but are not intended to limit sizes, content, an order, a time sequence, priorities, importance, or the like of the plurality of objects. For example, resources for first COT transmission and resources for second COT transmission are merely used to distinguish between different COT transmission resources, but do not indicate a difference in priorities, importance degrees, or the like of the two resources.

The foregoing describes some terms in embodiments of this application. The following describes technical features in embodiments of this application.

In a 5th generation mobile communication technology (5th generation mobile communication technology, 5G) new radio (new radio, NR) system, there are two transmission modes (modes) for resource allocation by a terminal device on a sidelink (sidelink, SL). One is a base-station resource allocation mode 1 (mode 1), and the other is a terminal-device self-selection resource mode 2 (mode 2). In the mode 1, a base station may centrally allocate resources based on a buffer status report (buffer status report, BSR) reported by the terminal device.

In the mode 2, refer to FIG. 1. A transmitting-end terminal device may perform sensing on resources in a resource pool, and select, based on a sensing result, a resource in a resource selection window $[n+T_1, n+T_2]$ for communication. Currently, a common resource selection manner is that the transmitting-end terminal device needs to perform full sensing on all slots that belong to a sidelink resource pool and that are in a perception window $[n-T_0, n-T_{proc,0}^{'SL}]$ except a resource used by the transmitting-end terminal device to send data, and perform resource exclusion based on a sensing result. This may cause high computing overheads, and is not conducive to power saving.

To reduce power overheads, a resource selection manner based on partial sensing (partial sensing) is further defined in conventional technologies. The resource selection manner based on partial sensing further includes a resource selection manner based on periodic-based partial sensing (periodic-based partial sensing, PBPS) and a resource selection manner based on contiguous partial sensing (contiguous partial sensing, CPS). Refer to FIG. 2. For the PBPS, a terminal device determines a candidate slot set Y in a resource selection window $[n+T_1, n+T_2]$. To ensure that there are sufficient resources for selection, the candidate slot set Y needs to be larger than or equal to Ymin, where Ymin may be configured by a base station or may be preconfigured. Each candidate slot in the candidate slot set Y corresponds to one or two sensing occasions (sensing occasions) for full reservation or partial periodicity reservation ($P_{reserve}$) configured in the resource pool, where the sensing occasion depends on the configuration. For the CPS, at least M slots need to be monitored before a 1st candidate slot $t_{y0}$, so that it can be ensured that the terminal device has sufficient sensing slots. This ensures accuracy of a sensing result. Further, the terminal device determines a final candidate resource set based on the candidate slot set Y, and reports the final candidate set to a MAC layer of the terminal device.

Usually, on an unlicensed spectrum, when accessing an unlicensed channel, access devices (for example, base stations or terminal devices) that use different radio access technologies (radio access technologies, RATs) need to first perform clear channel assessment (clear channel assessment, CCA), for example, a listen before talk (listen before talk, LBT) mechanism. In this case, only after determining that the channel is idle, the access devices can use the channel for communication. In evolution of an NR sidelink technology, SL transmission supports only resource scheduling and reservation based on a single slot. If SL transmission is performed on the unlicensed spectrum, the terminal device is required to perform Type 1 LBT before each time of transmission, to check whether a channel is idle. In this case, the terminal device needs to access the channel for a plurality of times. Consequently, an overall transmission rate is reduced.

To reduce a quantity of times of performing LBT and improve transmission efficiency, after accessing a channel, the base station and the terminal may continuously occupy the channel for a period of transmission time, where the period transmission time may be referred to as a period of COT (channel occupancy time). Maximum channel occupancy time (maximum channel occupancy time, MCOT) is related to a type of UE LBT and a channel access priority class (channel access priority class, CAPC). The base station initiating COT may choose to share, with the UE, the COT that can be occupied by the base station. Similarly, COT initiated by the UE may also be shared with the base station. The UE or base station sharing the COT may not perform LBT or perform LBT for short time provided that a transmission interval is shorter than specific time.

In the evolution of the NR sidelink technology, to support a higher data transmission rate, supporting higher bandwidth including an unlicensed spectrum becomes a technology evolution direction. However, SL transmission supports only scheduling and reservation based on a single slot. In this case, if SL transmission is performed on the unlicensed spectrum, the terminal device needs to perform LBT, specifically, Type 1 LBT before each time of transmission, to check whether a channel is idle. This affects the overall transmission rate. Therefore, it is necessary to introduce a COT transmission mechanism to the SL transmission.

However, in an existing resource selection or determining manner (for example, the mode 2), different terminal devices each perform sensing on resources in resource pools, to select resources for communication. Usually, because the different terminal devices are at different locations or in different channel environments, it is difficult for each terminal device to effectively determine (select) a transmission resource, to achieve one COT transmission. Consequently, a transmission rate of sidelink transmission SL is low.

Based on this, this application provides a resource determining method. The method includes: A first terminal device determines first channel occupancy time COT reservation information of the first terminal device and one or more pieces of second channel occupancy time COT reservation information of a second terminal device. The first terminal device performs resource exclusion on a first COT candidate resource set based on the first COT reservation information and the one or more pieces of second COT reservation information, to obtain an updated first COT candidate resource set, where the updated first COT candidate resource set is used by the first terminal device and/or a third terminal device for sidelink transmission. Therefore, according to the method, a candidate resource of the first terminal device is determined, so that effective COT transmission is achieved, thereby improving a transmission rate of the sidelink transmission by the first terminal device.

The technical solutions in embodiments of this application may be applied to various communication systems (also referred to as wireless communication systems). The communication system usually includes but is not limited to a system including cellular communication (including 5G NR communication and LTE), internet of vehicles, terminal direct communication (sidelink communication), and Wi-Fi communication. This is not specifically limited in this application.

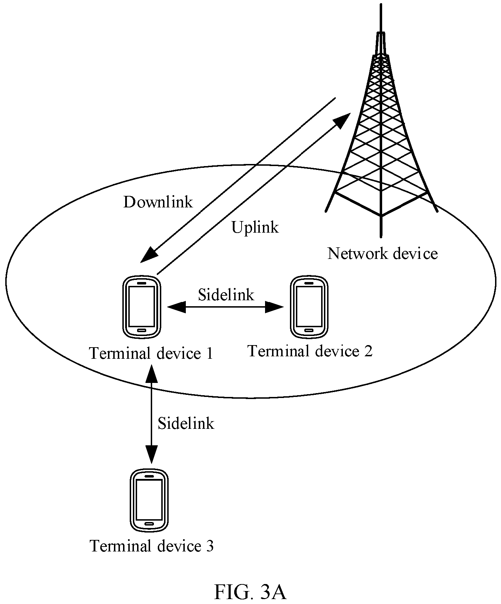

FIG. 3A to FIG. 3D are diagrams of architectures of several communication systems to which a resource determining method may be applicable according to an embodiment of this application. As shown in FIG. 3A, a communication system may include at least one terminal device (for example, a terminal device 1 and a terminal device 2) and a network device (for example, a base station). The terminal device 1 and the terminal device 2 may be within coverage of the network device. Both the terminal device 1 and the terminal device 2 may communicate with the network device over an uplink or a downlink. The terminal device 1 and the terminal device 2 may communicate with each other. The terminal device 1 and/or the terminal device 2 may further perform straight line communication with a terminal device that is not within the coverage of the network device. For example, the network device may schedule, to the terminal device 1 and/or the terminal device 2, a resource for sidelink transmission (or referred to as a sidelink communication resource), and the terminal device 1 performs sidelink transmission with the terminal device 2 based on the resource scheduled by the network device. In a mode 2, a resource pool may be configured by the network device or may be preconfigured. The terminal device 1 performs resource sensing (or referred to as sensing, resource awareness or perception, or the like) and resource selection in the resource pool, and performs sidelink transmission with the terminal device 2 via a selected resource. The terminal device 1 that performs mode sidelink transmission needs to have a sensing capability or support selection, through sensing, of a transmission resource for sidelink communication. Optionally, the resource pool may be continuous or discontinuous in time domain, and may be continuous or discontinuous in frequency domain. This is not limited in this application.

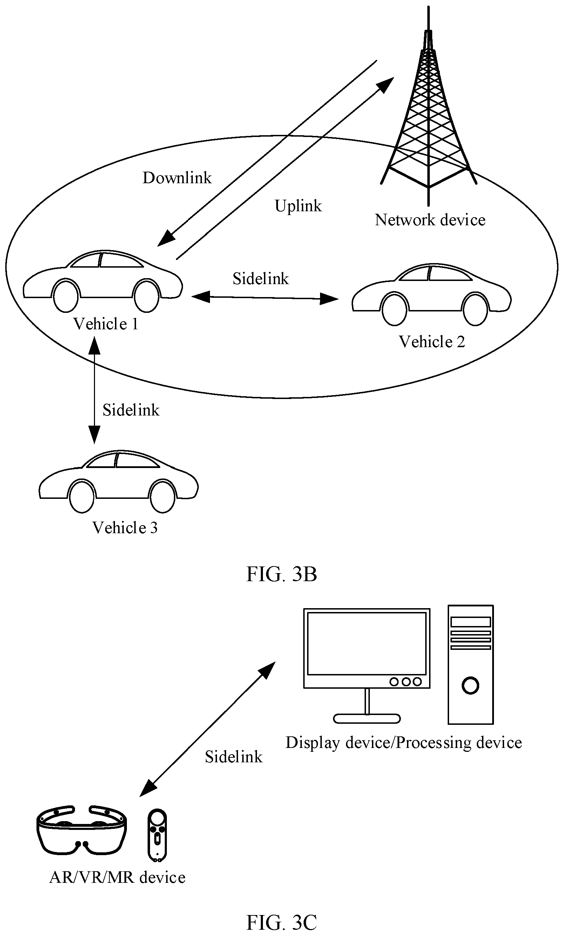

FIG. 3B shows an architecture of a communication system including cellular communication and internet of vehicles. The communication system includes a network device and at least one vehicle within coverage of the network device, for example, a vehicle 1 and a vehicle 2, and at least one vehicle that is not within the coverage of the network device, for example, a vehicle 3. The vehicle 1 may communicate with the network device over an uplink or a downlink, or may perform straight-line communication with the vehicle 2 and/or the vehicle 3.

FIG. 3C shows a communication architecture of straight-line communication between terminals. The communication architecture includes at least two terminal devices. For example, a first terminal device may be an augmented reality (augmented reality, AR) device/a virtual reality (virtual reality, VR) device/a mixed reality (mixed reality, MR) device, and a second terminal device may be a processing device/a display device. The first terminal device may communicate with the second terminal device over a sidelink.

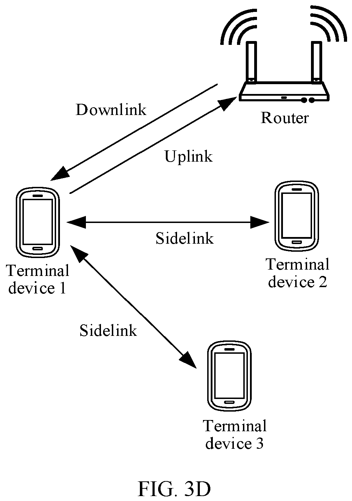

FIG. 3D shows a Wi-Fi communication architecture. The communication architecture includes a network access device (for example, a router) and at least two terminal devices, for example, a terminal device 1, a terminal device 2, and a terminal device 3. The terminal device 1 may perform uplink communication with the router over an uplink, and perform downlink communication over a downlink. The terminal device 1 may further communicate with the terminal device 2 and the terminal device 3 over sidelinks.

It should be noted that the network device in embodiments of this application may be but is not limited to a base station, a TRP, a CPE, a router, or a network access device. The terminal device in embodiments of this application may be but is not limited to a communication module in the terminal device, a mobile phone or a communication module in the mobile phone, a vehicle or a communication module in the vehicle, an information processing device, a display device, or an AR device/a VR device/an MR device.

The technical solutions of this application are described below with reference to specific embodiments.

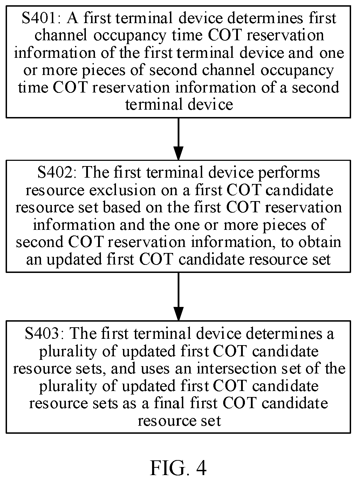

FIG. 4 is a schematic flowchart of a resource determining method according to an embodiment of this application. The method may be performed by a transceiver and/or a processor of a terminal device, or may be performed by a chip corresponding to the transceiver and/or the processor. Alternatively, this embodiment may be implemented by a controller or control apparatus connected to the terminal device, where the controller or the control apparatus is configured to manage at least one terminal device including a first terminal device. In addition, a specific form of the terminal device that performs this embodiment is not specifically limited in this application. Refer to FIG. 4. A specific procedure of the method is as follows:

S401: The first terminal device determines first channel occupancy time COT reservation information of the first terminal device and one or more pieces of second channel occupancy time COT reservation information of a second terminal device.

In an implementation, that the first terminal device determines first channel occupancy time COT reservation information of the first terminal device and one or more pieces of second channel occupancy time COT reservation information of a second terminal device includes but is not limited to the following two implementations:

Manner 1: The first terminal device obtains the first channel occupancy time COT reservation information of the first terminal device and the one or more pieces of second channel occupancy time COT reservation information of the second terminal device.

For example, the first COT reservation information may be preset in the first terminal device, and the first terminal device obtains the one or more pieces of second COT reservation information of the second terminal device from another apparatus. Alternatively, the first terminal device may obtain the second COT reservation information of the second terminal device and the first COT reservation information from another apparatus. The another apparatus is a communication apparatus, for example, a network device (a base station), that can obtain and manage information (including COT reservation information) of the first terminal device and information (including COT reservation information) of the one or more second terminal devices. The another apparatus may alternatively be one second terminal device in the one or more second terminal devices, and may obtain the first COT reservation information and the one or more pieces of second COT reservation information. Alternatively, the first terminal device may obtain the first COT reservation information from a higher layer, for example, a MAC layer, of the first terminal device, and obtain the one or more pieces second COT reservation information of the second terminal device from another apparatus.

For another example, the first terminal device may obtain sidelink control information (sidelink control information, SCI) or a medium access control information element (MAC CE) of the one or more second terminal devices. Each piece of SCI/each MAC CE or transmission by a second terminal device that performs initial COT transmission carries second COT reservation information of the corresponding second terminal device. The first terminal device may perform decoding (or parsing) on each piece of SCI/each MAC CE, and obtain the corresponding second COT reservation information from the SCI/MAC CE.

Therefore, a manner in which the first terminal device directly obtains the one or more pieces of second COT reservation information of the second terminal device and the first COT reservation information is not specifically limited in this application.

It should be understood that one of the one or more pieces of second COT reservation information of the second terminal device corresponds to COT reservation information of one second terminal device.

Manner 2: The first terminal device determines the first channel occupancy time COT reservation information of the first terminal device and the one or more pieces of second channel occupancy time COT reservation information of the second terminal device.

The first terminal device may obtain the first COT reservation information through measurement and/or calculation based on data and/or resource information of the first terminal device. The first terminal device obtains data and/or resource information of each of the one or more second terminal devices, and obtains corresponding second COT reservation information through measurement and/or calculation. In other words, the data and information included in the first COT reservation information and the data and information included in the second COT reservation information of each second terminal device are calculated and determined by the first terminal device.

It should be noted that, in this embodiment of this application, the first terminal device is used as an example to select or determine a candidate resource set, and other terminal devices may perform resource selection or determining with reference to the manner used by the first terminal device (namely, refer to steps S401 to S403).

S402: The first terminal device performs resource exclusion on a first COT candidate resource set based on the first COT reservation information and the one or more pieces of second COT reservation information, to obtain an updated first COT candidate resource set.

The updated first COT candidate resource set is used by the first terminal device and/or a third terminal device for sidelink transmission.

It should be understood that the third terminal device includes a terminal device that can perform COT sharing with the first terminal device.

In an implementation, that the first terminal device determines the first COT candidate resource set includes: The first terminal device selects, from a resource selection window based on a preset time domain and a preset frequency domain, COT transmission resources that meet the preset time domain and the preset frequency domain as first COT candidate resources, to obtain the first COT candidate resource set.

For example, for all transmission resources in the resource selection window, COT is used as a unit (granularity), and time domain information and frequency domain information of each COT transmission resource are determined. If the preset time domain is L_cot slots, and the preset frequency domain is M sub-channels that are used as one COT transmission resource, the COT transmission resources that meet the preset time domain and the preset frequency domain are used as the first COT candidate resources based on time domain information and frequency domain information of all COT transmission resources in the resource selection window, to obtain the first COT candidate resource set, that is, each first COT candidate resource in the first COT candidate resource set meets that time domain is L_cot slots and frequency domain is M sub-channels.

When step S402 is performed, step S402 includes but is not limited to the following two implementations.

Implementation 1: The first terminal device excludes, based on the first COT reservation information and the one or more pieces of second COT reservation information, first COT candidate resources that meet a first condition from the first COT candidate resource set, to obtain the updated first COT candidate resource set.

The following describes the first COT reservation information and each piece of second COT reservation information that are in Implementation 1.

The second COT reservation information indicates resources for second COT transmission, and the resources for the second COT transmission are used by the second terminal device and/or a plurality of fourth terminal devices for sidelink transmission.

It should be understood that the fourth terminal device is a terminal device that can perform COT sharing with the first terminal device.

Optionally, each piece of second COT reservation information may include one or more of the following: the resources for the second COT transmission; a priority value of the second COT transmission; and a periodicity of the second COT transmission.

The priority value of the second COT transmission is a smallest value in priority values of the transmission by the second terminal device and/or the plurality of fourth terminal devices, and the periodicity of the second COT transmission is determined based on periodicities of the transmission by the second terminal device and/or the plurality of fourth terminal devices.

A second terminal device A is used as an example. Resources for second COT transmission by the second terminal device A are used by the second terminal device A and/or the plurality of fourth terminal devices for sidelink transmission. If it is determined that priority values of the transmission by the terminal device A and/or the plurality of fourth terminal devices include PA-1, PA-2, PA-3, ..., and PA-N, where N is a positive integer, the priority value of the second COT transmission included in the second COT reservation information is PA-1 when it is determined that PA-1 is a smallest value in PA-1, PA-2, PA-3, ..., and PA-N.

It is determined that periodicities of the transmission by the terminal device A and/or the plurality of fourth terminal devices are respectively CA-1, CA-2, CA-3, ..., and CA-N, where N is a positive integer, and a comprehensive periodicity CA is obtained based on CA-1, CA-2, CA-3, ..., and CA-N, for example, a least common multiple of values of CA-1, CA-2, CA-3, ..., and CA-N is used as a value of the comprehensive periodicity CA.

In this case, a periodicity of second COT transmission included in second COT reservation information corresponding to the second terminal device A is CA.

Optionally, the first COT reservation information includes one or more of the following: resources for first COT transmission; a priority value of the first COT transmission; and a periodicity of the first COT transmission. The resources for the first COT transmission are used by the first terminal device and/or the one or more third terminal devices for sidelink transmission, the priority value of the first COT transmission is a smallest value in priority values of the transmission by the first terminal device and/or the one or more third terminal devices, and the periodicity of the first COT transmission is determined based on periodicities of the transmission by the first terminal device and/or the one or more third terminal devices.

The information in the first COT reservation information may be determined in the manner of determining the second COT reservation information. Details are not described herein again.

The first condition in Implementation 1 is described below.

The first condition is any one or more of the following:

(1) A first RSRP measurement value of the first COT candidate resource is greater than a first RSRP threshold, where the first RSRP measurement value of the first COT candidate resource is equal to a first RSRP measurement value of the second COT transmission, and the first RSRP measurement value of the second COT transmission is a largest value in RSRP measurement values of resources that are for the second COT transmission and that overlap with the first COT candidate resources, or the first RSRP measurement value of the second COT transmission is a largest value in RSRP measurement values of all the resources for the second COT transmission; and the first RSRP threshold is determined based on the priority value of the first COT transmission included in the first COT reservation information and the priority value of the second COT transmission included in the second COT reservation information.

In other words, the resources for the second COT transmission overlap with the first COT candidate resources, or transmission resources that are reserved from the resources for the second COT transmission based on the periodicity corresponding to the second COT transmission overlap with transmission resources that are reserved from the first COT candidate resources based on the periodicity of the first COT transmission. In this case, overlapped resources for the second COT transmission are referred to as resources for third COT transmission, and overlapped first COT candidate resources are referred to as resources for fourth COT transmission. Because the resource for the third COT transmission may include a plurality of transmission resources, and each transmission resource is a resource occupied for one time of transmission, first RSRP measurement values of a plurality of transmissions in the third COT transmission may be obtained through measurement, that is, RSRP measurement values of the plurality of transmissions in the third COT transmission are obtained, and a largest RSRP measurement value is selected from the RSRP measurement values as the first RSRP measurement value of the first COT candidate resource.

Alternatively, RSRP measurement values corresponding to all the resources for the second COT transmission may be directly obtained through measurement, to select a largest RSRP measurement value as the first RSRP measurement value of the first COT candidate resource.

It should be noted that the first RSRP measurement value of the first COT candidate resource may alternatively be a smallest value in the RSRP measurement values of the resources that are for the second COT transmission and that overlap with the first COT candidate resources, or may be a smallest value in the RSRP measurement values of all the resources for the second COT transmission. Specifically, selection of the largest value or the smallest value may be set based on an actual situation. This is not specifically limited in this application.

In addition, due to some factors, the first RSRP measurement value of the first COT candidate resource is not necessarily equal to the first RSRP measurement value of the second COT transmission, and the first RSRP measurement value of the first COT candidate resource and the first RSRP measurement value of the second COT transmission meet a known relationship, that is, the first RSRP measurement value of the first COT candidate resource may be determined based on the first RSRP measurement value of the second COT transmission.

The first RSRP threshold may be determined in the following manner:

For example, a first index value (or a first sequence value) in a preset threshold list (for example, sl-Thres-RSRP-List) may be determined based on the priority value (for example, Pj_cot) of the first COT transmission included in the first COT reservation information and the priority value (for example, Pi_cot) of the second COT transmission included in the second COT reservation information (refer to the foregoing example of the second COT reservation information). The preset threshold list includes a plurality of RSRP thresholds, and each sequence or index value corresponds to one RSRP threshold. Therefore, the first index value (i_cot) may satisfy Formula 1 in the following:

$$i\_cot = Pi\_cot + (Pj\_cot) * 8 \qquad\qquad \text{Formula 1}$$

A corresponding threshold, for example, Th(Pi_cot, Pj_cot), is found in the preset threshold list based on the first index value, and the threshold Th(Pi_cot, Pj_cot) is used as a corresponding first RSRP threshold.

(2) The first COT candidate resources overlap with transmission resources that are reserved by the one or more second terminal devices based on the periodicity corresponding to the second COT transmission.

(3) Transmission resources that are reserved from the first COT candidate resources based on the periodicity of the first COT transmission overlap with the transmission resources that are reserved by the one or more second terminal devices based on the periodicity corresponding to the second COT transmission.

Implementation 2: The first terminal device excludes, based on the first COT reservation information and the one or more pieces of second COT reservation information, first COT candidate resources that meet a second condition from the first COT candidate resource set, to obtain the updated first COT candidate resource set.

The following describes the first COT reservation information and each piece of second COT reservation information that are in Implementation 2.

The second COT reservation information is for determining resources for third COT transmission, where the resources for the third COT transmission include: transmission resources that are in resources for second COT transmission and that overlap with the first COT candidate resources, and/or resources that are for the second COT transmission and on which transmission resources that are reserved from the resources for the second COT transmission based on a periodicity corresponding to the second COT transmission overlap with transmission resources that are reserved from the first COT candidate resources based on a periodicity of first COT transmission.

Optionally, the second COT reservation information includes one or more of the following: the resources for the third COT transmission; and a second priority value of each transmission on the resources for the third COT transmission.

The first COT reservation information is for determining resources for fourth COT transmission, where the resources for the fourth COT transmission include: first COT candidate resources that overlap with the resources for the second COT transmission, and first COT candidate resources on which the transmission resources that are reserved from the first COT candidate resources based on the periodicity of the first COT transmission overlap with the transmission resources that are reserved from the resources for the second COT transmission based on the periodicity corresponding to the second COT transmission.

Optionally, the first COT reservation information includes one or more of the following: the resources for the fourth COT transmission; and a first priority value of each transmission on the resources for the fourth COT transmission.

The second condition in Implementation 2 is described below.

Optionally, the second condition includes: A second RSRP measurement value of any transmission resource in the resources for the fourth COT transmission is greater than a corresponding second RSRP threshold, where a second RSRP measurement value of each transmission resource in the resources for the fourth COT transmission is equal to a second RSRP measurement value of a corresponding transmission resource in the resources for the third COT transmission. The second RSRP threshold is determined based on a first priority value of one transmission included in the fourth COT transmission and a second priority value of one corresponding transmission included in the third COT transmission.

The resources for the third COT transmission overlap with the resources for the fourth COT transmission, and transmission resources in the resources for the third COT transmission are in one-to-one correspondence with transmission resources in the resources for the fourth COT transmission, or one transmission resource in the resources for the third COT transmission corresponds to a plurality of transmission resources in the resources for the fourth COT transmission, or a plurality of transmission resources in the resources for the third COT transmission correspond to one transmission resource in the resources for the fourth COT transmission. Therefore, a status in which the resources for the third transmission overlap with the resources for the fourth COT transmission may be determined based on an actual situation. This is not limited in this application.

For example, the transmission resources in the resources for the third COT transmission are in one-to-one correspondence with the transmission resources in the resources for the fourth COT transmission. If the resources for the fourth COT transmission include four transmission resources, namely, 1-1, 1-2, 1-3, and 1-4, the resources for the third COT transmission include four transmission resources, namely, 2-1, 2-2, 2-3, and 2-4, where each transmission resource may represent a resource occupied for each time of transmission.

A second RSRP measurement value of each transmission resource in the resources for the third COT transmission may be obtained through measurement, that is, second RSRP measurement values of the four transmission resources in the resources for the third COT transmission are respectively RSRP(2-1), RSRP(2-2), RSRP(2-3), and RSRP(2-4). In this case, second RSRP measurement values of the four transmission resources in the resources for the fourth COT transmission may also be obtained based on the second RSRP measurement values of the four transmission resources in the resources for the third COT transmission, that is, the second RSRP measurement values of the four transmission resources in the resources for the fourth COT transmission are respectively obtained as follows:

$$RSRP(1\text{-}1) = RSRP(2\text{-}1);$$

$$RSRP(1\text{-}2) = RSRP(2\text{-}2);$$

$$RSRP(1\text{-}3) = RSRP(2\text{-}3);$$

and

$$RSRP(1\text{-}4) = RSRP(2\text{-}4).$$

It should be noted that the second RSRP measurement value may be an RSRP measurement value obtained by measuring a resource of a demodulation reference signal DMRS of a physical sidelink shared channel PSSCH or may be an RSRP measurement value obtained by measuring a resource that carries a demodulation reference signal DMRS and that is of a PSCCH.

By using Formula 1 and the preset threshold list, a corresponding second RSRP threshold A may be determined based on a first priority value of a $1^{st}$ transmission resource 1-1 in the resources for the fourth COT transmission and a second priority value of a $1^{st}$ transmission resource 2-1 in the resources for the third COT transmission.

Similarly, by using Formula 1 and the preset threshold list, a corresponding second RSRP threshold B may be determined based on a first priority value of a $2^{nd}$ transmission resource 1-2 in the resources for the fourth COT transmission and a second priority value of a $1^{st}$ transmission resource 2-2 in the resources for the third COT transmission.

By using Formula 1 and the preset threshold list, a corresponding second RSRP threshold C may be determined based on a first priority value of a $3^{rd}$ transmission resource 1-3 in the resources for the fourth COT transmission and a second priority value of a $1^{st}$ transmission resource 2-3 in the resources for the third COT transmission.

By using Formula 1 and the preset threshold list, a corresponding second RSRP threshold D may be determined based on a first priority value of a $4^{th}$ transmission resource 1-4 in the resources for the fourth COT transmission and a second priority value of a $1^{st}$ transmission resource 2-4 in the resources for the third COT transmission.

Further, second RSRP(1-1) is compared with the second RSRP threshold A, second RSRP(1-2) is compared with the second RSRP threshold B, second RSRP(1-3) is compared with the second RSRP threshold C, and second RSRP(1-4) is compared with the second RSRP threshold C. If any second RSRP value is greater than the corresponding second RSRP threshold, a first COT candidate resource is excluded from the first COT candidate resource set.

S403. The first terminal device determines a final first COT candidate resource set based on the updated first COT candidate resource set.

In an implementation, that the first terminal device determines a final first COT candidate resource set based on the updated first COT candidate resource set includes:

The first terminal device determines a plurality of updated first COT candidate resource sets, where the plurality of updated first COT candidate resource sets are determined from the first COT candidate resources based on a plurality of COT lengths and corresponding COT transmission periodicities, and each updated first COT candidate resource set is determined from the first COT candidate resources based on one COT length and a corresponding COT transmission periodicity.

The first terminal device uses an intersection set of the plurality of updated first COT candidate resource sets as the final first COT candidate resource set.

It should be noted that steps S401 to S403 may be performed by a physical layer of the first terminal device. After obtaining the final first COT candidate resource set, the physical layer of the first terminal device reports the final first COT candidate resource set to the higher layer of the first terminal device (for example, the MAC layer of the first terminal device). Alternatively, steps S401 and S402 may be performed by a physical layer of the first terminal device. After obtaining one or more updated first COT candidate resource sets, the physical layer of the first terminal device reports the one or more updated first COT candidate resource sets to the higher layer of the first terminal device (for example, the MAC layer of the first terminal device). Further, the higher layer of the first terminal device performs step S403, to determine the final first COT candidate resource set. Therefore, this is not specifically limited in this application. Further, the higher layer of the terminal device may select, from the determined final first COT candidate resource, a resource for COT transmission.

Based on this, this application provides a resource determining method. The method includes: A first terminal device determines first channel occupancy time COT reservation information of the first terminal device and one or more pieces of second channel occupancy time COT reservation information of a second terminal device. The first terminal device performs resource exclusion on a first COT candidate resource set based on the first COT reservation information and the one or more pieces of second COT reservation information, to obtain an updated first COT candidate resource set, where the updated first COT candidate resource set is used by the first terminal device and/or a third terminal device for sidelink transmission. Therefore, according to the method, a candidate resource of the first terminal device is determined, so that effective COT transmission is achieved, thereby improving a transmission rate of the sidelink transmission by the first terminal device.

The resource determining method provided in the solution in this application is further described in detail below by using a specific implementation.

**Embodiment 1**

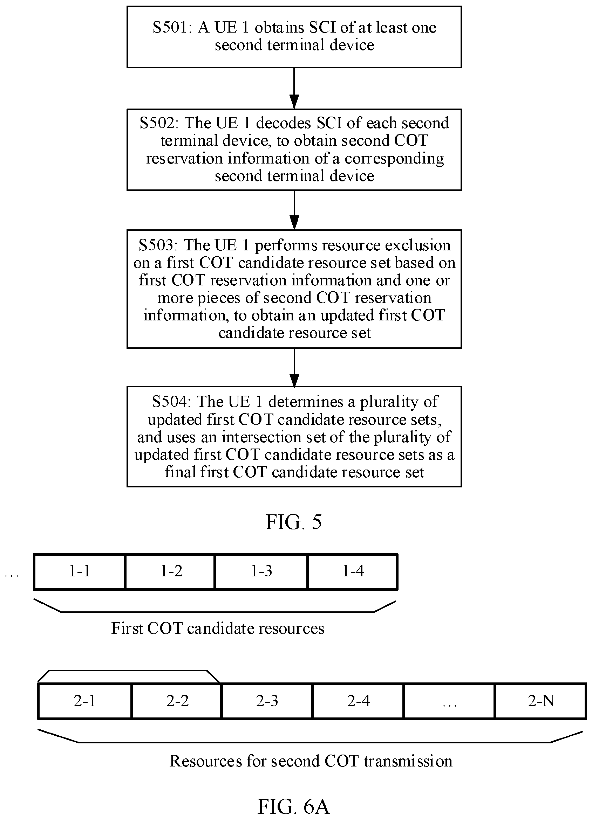

In Embodiment 1, a first terminal device (UE 1) may perform sidelink communication with at least one second terminal device. First, the UE 1 may obtain sidelink control information SCI corresponding to at least one other terminal device, where each of the at least one other terminal device may be collectively referred to as a second terminal device. Then, the UE 1 parses each piece of SCI to obtain corresponding reservation information. Finally, the UE 1 may determine a candidate resource set based on reservation information of the UE 1 and reservation information of the at least one other terminal device. Refer to FIG. 5. A specific procedure of Embodiment 1 is as follows:
S501: The UE 1 obtains SCI of at least one second terminal device.

The at least one second terminal device may perform sidelink communication with the UE 1, and may perform COT sharing with the UE 1. The at least one second terminal device and the UE 1 may be within coverage of a same network device, or the at least one second terminal device and the UE 1 are not within coverage of a same network device, or the UE 1 and some of the at least one second terminal device are within coverage of a same network device. This is not specifically limited in embodiments of this application.

For example, the second terminal devices that perform COT sharing with the UE 1 include a UE 2, a UE 3, and a UE 4. If the UE 1, the UE 2, the UE 3, and the UE 4 are all in coverage of a same base station, the UE 1 may obtain (or receive) SCI 2 of the UE 2, SCI 3 of the UE 3, and SCI 4 of the UE 4 from the base station; or the UE 1 obtains (receives) SCI 2 from the UE 2, obtains (receives) SCI 3 from the UE 3, and obtains (receives) SCI 4 from the UE 4; or the UE 1 obtains (receives) SCI 2, SCI 3 of the UE 3, and SCI 4 of the UE 4 from the UE 2. Therefore, a manner in which the UE 1 obtains the SCI of the at least one second terminal device is not specifically limited in this application.

S502: The UE 1 decodes SCI of each second terminal device, to obtain second COT reservation information of a corresponding second terminal device.

The second COT reservation information indicates resources for second COT transmission, and the resources for the second COT transmission are used by the second terminal device and/or a plurality of fourth terminal devices for sidelink transmission.

It should be understood that the fourth terminal device is a terminal device that can perform COT sharing with the second terminal device.

Optionally, each piece of second COT reservation information includes one or more of the following:

the resources for the second COT transmission;

a priority value of the second COT transmission; and

a periodicity of the second COT transmission.

The priority value of the second COT transmission is a smallest value in priority values of the transmission by the second terminal device and/or the plurality of fourth terminal devices, and the periodicity of the second COT transmission is determined based on periodicities of the transmission by the second terminal device and/or the plurality of fourth terminal devices.

For example, a physical layer of the UE 1 decodes the SC 2 of the UE 2 to obtain second COT reservation information of the UE 2; the UE 1 decodes the SC 3 of the UE 3 to obtain second COT reservation information of the UE 3; and the UE 1 decodes the SC 4 of the UE 4 to obtain second COT reservation information of the UE 4.

The following uses the second COT reservation information of the UE 2 as an example for detailed description.

The second COT reservation information of the UE 2 indicates resources for second COT transmission by the UE 2, and the resources for the second COT transmission by the UE 2 are used by the UE 2 and/or the fourth terminal devices (that is, all terminal devices that can perform COT sharing with the UE 2) for sidelink transmission.

The second COT reservation information of the UE 2 may include any one or more of the following: the resources for the second COT transmission; a priority value of the second COT transmission; and a periodicity of the second COT transmission.

The priority value of the second COT transmission included in the second COT reservation information may be determined in the following manner:

If the resources for the second COT transmission include N transmission resources (where each transmission resource may be understood as a resource occupied for each time of transmission performed by the UE 2 and/or a resource for each time of transmission performed by each fourth terminal device), where N is a positive integer. Priority values corresponding to the N transmission resources are respectively $P\_1, P\_2, P\_3, ...,$ and $P\_N$. A smallest value in the priority values of the N transmission resources is used as the priority value of the second COT transmission. For example, if $P\_1$ is the smallest value, the priority value of the second COT transmission included in the second COT reservation information is $P\_1$.

The periodicity of the second COT transmission included in the second COT reservation information may be determined in the following manner:

If periodicities of the N transmission resources corresponding to the resources for the second COT transmission are respectively $C\_1, C\_2, C\_3, ...,$ and $C\_N$, the periodicity of the second COT transmission is obtained based on the periodicities of the N transmission resources. For example, a least common multiple of $C\_1, C\_2, C\_3, ...,$ and $C\_N$ is used as the periodicity of the second COT transmission.

It should be understood that, for a manner of determining information included in the second COT reservation information of the UE 3 and information included in the second COT reservation information of the UE 4, refer to descriptions of the second COT reservation information of the UE 2. Details are not described herein again.

S503: The UE 1 performs resource exclusion on a first COT candidate resource set based on first COT reservation information and one or more pieces of second COT reservation information, to obtain an updated first COT candidate resource set.

Optionally, step S503 may be performed by the physical layer of the UE 1.

The first COT reservation information includes any one or more of the following: resources for first COT transmission; a priority value of the first COT transmission; and a periodicity of the first COT transmission.

The resources for the first COT transmission are used by the first terminal device and/or one or more third terminal devices (that is, all terminal devices that can perform COT sharing with the UE 1) for sidelink transmission, the priority value of the first COT transmission is a smallest value in priority values of the transmission by the first terminal device and/or the one or more third terminal devices, and the periodicity of the first COT transmission is determined based on periodicities of the transmission by the first terminal device and/or the one or more third terminal devices.

For a manner of determining the priority value of the first COT transmission and a manner of determining the periodicity of the first COT transmission, refer to the manner of determining the priority value of the second COT transmission by the UE 2 and the manner of determining the periodicity of the second COT transmission by the UE 2. Details are not described herein again.

Before step S503, the method further includes: The UE 1 determines the first COT candidate resource set (where the first COT candidate resource set may be represented by SA). That the UE 1 determines the first COT candidate resource set includes: The UE 1 selects, from a resource selection window based on a preset time domain and a preset frequency domain, all COT transmission resources that meet the preset time domain and the preset frequency domain as first COT candidate resources, so that the UE 1 obtains the first COT candidate resource set (where the first COT candidate resource set may be represented by SA).

For example, the preset time domain is L_cot slots, and the preset frequency domain is M sub-channels that are used as one COT candidate resource. The UE 1 selects, from the resource selection window, all the COT transmission resources that meet the preset time domain and the preset frequency domain resource as the first COT candidate resources, to obtain the first COT candidate resource set.

Time domain may be understood as that a time domain length of each candidate resource (namely, the COT candidate resource) is L_cot slots.

L_cot is greater than or equal to 1, and is less than or equal to MCOT (maximum channel occupancy time). L_cot may be a length of actual transmission of COT, or may be a maximum COT length, that is, the MCOT.

When L_cot is equal to 1, a resource reservation manner is the same as an existing resource reservation manner. The UE may enable or disable reservation at a granularity of COT in this manner (configuring L_cot = 1). Alternatively, a UE capability may be indicated in this manner. When L_cot = 1, it indicates that the UE does not support resource selection at a granularity of COT.

Frequency domain may be understood as that the UE may perform access based on bandwidth of an entire access channel, and in this case, a frequency domain size of the candidate resource is the bandwidth of the entire channel; or the UE may perform access at a granularity of an interlace (interlace) or a first sub-channel, and in this case, a size of the COT candidate resource is one or more interlaces or one or more sub-channels.

It should be noted that, the sub-channel may occupy consecutive physical resource blocks (physical resource blocks, PRBs) in frequency domain, or occupy inconsecutive PRBs in frequency domain at a frequency domain interval (in other words, the sub-channel is of an interlace structure).

In a possible implementation, that the UE 1 performs resource exclusion on a first COT candidate resource set based on first COT reservation information and one or more pieces of second COT reservation information, to obtain an updated first COT candidate resource set (where the updated first COT candidate resource set may be represented by SA') includes:

The UE 1 excludes, based on the first COT reservation information and the one or more pieces of second COT reservation information, first COT candidate resources that meet a first condition from the first COT candidate resource set, to obtain the updated first COT candidate resource set (SA').

The first condition is any one or more of the following:

(1) A first RSRP measurement value of the first COT candidate resource is greater than a first RSRP threshold, where the first RSRP measurement value of the first COT candidate resource is equal to a first RSRP measurement value of the second COT transmission, and the first RSRP measurement value of the second COT transmission is a smallest value in RSRP measurement values of resources that are for the second COT transmission and that overlap with the first COT candidate resources; and the first RSRP threshold is determined based on the priority value of the first COT transmission included in the first COT reservation information and the priority value of the second COT transmission included in the second COT reservation information.

For example, a first RSRP measurement value of each first COT candidate resource may be determined in the following manner:

Refer to FIG. 6A. A first RSRP measurement value of an $i^{th}$ first COT candidate resource is determined by using the $i^{th}$ first COT candidate resource and a $j^{th}$ resource for the second COT transmission as an example (where the $i^{th}$ first COT candidate resource overlaps with the $j^{th}$ resource for the second COT transmission).

First RSRP measurement values of the resources for the second COT transmission may be obtained through measurement in a perception window. For example, transmission resources that are in the resources for the second COT transmission and that overlap with the first COT candidate resources are 2-1, 2-2, 2-3, and 2-4, and RSRP measurement values of the four transmission resources are respectively RSRP1, RSRP2, RSRP3, and RSRP4. The first RSRP measurement value of the second COT transmission is a largest value in RSRP1, RSRP2, RSRP3, and RSRP4. If RSRP1 is the largest value in RSRP1, RSRP2, RSRP3, and RSRP4, the first RSRP measurement value of the second COT transmission is RSRP1. The first RSRP measurement value of the first COT candidate resource may be equal to the first RSRP measurement value of the second COT transmission, that is, the first RSRP measurement value of the first COT candidate resource is RSRP1.

Alternatively, the resources for the second COT transmission include N transmission resources in total, namely, 2-1, 2-2, 2-3, 2-4, ..., and 2-N, where N is a positive integer greater than 4. RSRP measurement values corresponding to the N transmission resources are respectively RSRP1, RSRP2, RSRP3, RSRP4, ..., and RSRPN. The first RSRP measurement value of the second COT transmission is a largest value in RSRP values of all transmission resources in the resources for the second COT transmission, that is, a largest value in RSRP1, RSRP2, RSRP3, RSRP4, ..., and RSRPN. If RSRP2 is the largest value in RSRP1, RSRP2, RSRP3, RSRP4, ..., and RSRPN, the first RSRP measurement value of the second COT transmission is RSRP2. The first RSRP measurement value of the first COT candidate resource may be equal to the first RSRP measurement value of the second COT transmission, that is, the first RSRP measurement value of the first COT candidate resource is RSRP2.

The first RSRP threshold may be determined in the following manner:

If the resources for the second COT transmission include N transmission resources, that is, each transmission resource may be a resource occupied for one time of transmission, and priority values of N transmissions (that is, N times of transmission) on the resources for the second COT transmission are respectively P1, P2, ..., and PN, a smallest priority value in P1, P2, ..., and PN is used as the priority value of the second COT transmission. To be specific, if P1 is the smallest value, the priority value of the second COT transmission is P1. N is a positive integer greater than 1.

If the first COT candidate resources include N transmission resources, and priority values corresponding to the N transmission resources are respectively P1', P2', ..., and PN', a smallest priority value in P 1', P2', ..., and PN' is used as a priority value of the first COT candidate resource. To be specific, if P1' is the smallest value, the priority value of the first COT candidate resources is P1'. N is a positive integer greater than 1.

Based on the determined priority value P1 of the second COT transmission resource and the determined priority value P1' of the first COT candidate resource, it is determined that a sequence number (an (i_cot)$^{th}$ value) in a preset threshold list (namely, sl-Thres-RSRP-List) satisfies the following formula:

$$i\_cot = P1 + (P1') * 8$$

Because each sequence number in the preset threshold list (namely, sl-Thres-RSRP-List) corresponds to one RSRP value, the preset threshold list (namely, sl-Thres-RSRP-List) is queried for an RSRP value corresponding to the sequence number being the (i_cot)$^{th}$ value, and the RSRP value is used as the first RSRP threshold.

(2) The first COT candidate resources overlap with transmission resources that are reserved by the one or more second terminal devices based on the periodicity corresponding to the second COT transmission.

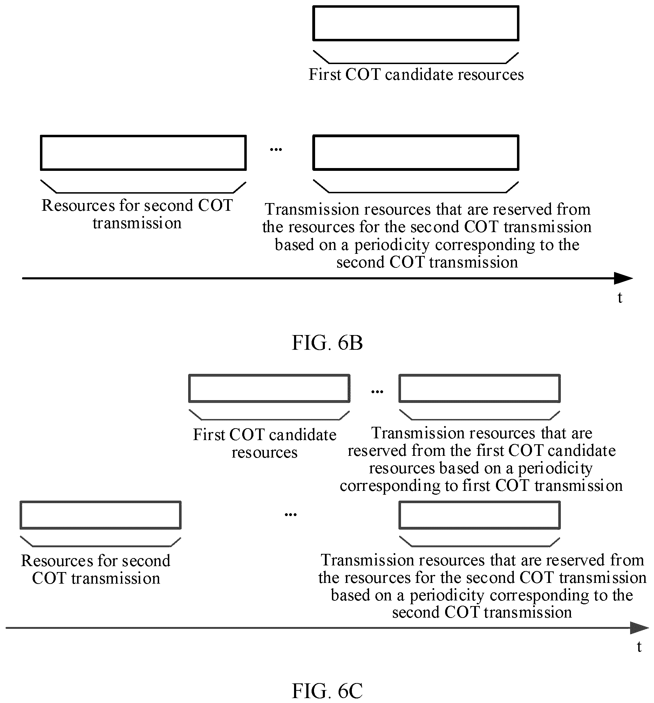

Refer to FIG. 6B. One second COT transmission is used as an example. The first COT candidate resources overlap with transmission resources that are reserved from the resources for the second COT transmission based on the periodicity corresponding to the second COT transmission.

(3) Transmission resources that are reserved from the first COT candidate resources based on the periodicity of the first COT transmission overlap with the transmission resources that are reserved by the one or more second terminal devices based on the periodicity corresponding to the second COT transmission.

Refer to FIG. 6C. One second COT transmission is used as an example. The transmission resources that are reserved from the first COT candidate resources based on the periodicity of the first COT transmission overlap with the transmission resources that are reserved from the resources for the second COT transmission by the second terminal device based on the periodicity of the second COT transmission.

S504: The UE 1 determines a plurality of updated first COT candidate resource sets, and uses an intersection set of the plurality of updated first COT candidate resource sets as a final first COT candidate resource set.

By performing step S504, the UE 1 obtains an updated first COT candidate resource set (SA'). Further, the UE 1 determines a plurality of updated first COT candidate resource sets based on a plurality of COT lengths and corresponding COT transmission periodicities. The plurality of updated first COT candidate resource sets are determined from the first COT candidate resources based on a plurality of COT lengths and corresponding COT transmission periodicities, and each updated first COT candidate resource set is determined from the first COT candidate resources based on one COT length and a corresponding COT transmission periodicity.

For example, the UE 1 determines n updated first COT candidate resource sets based on n COT lengths and corresponding COT transmission periodicities, where n is a positive integer greater than 1. The n updated first COT candidate resource sets are respectively SA'(1), SA'(2), ..., and SA'(n).

SA'(1) is a candidate resource set determined from the updated first COT candidate resource set SA' based on a COT length of 1 (L_cot = 1) and a periodicity P_reserve.

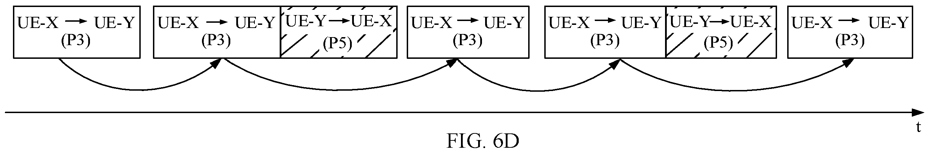

It should be noted that a set SA'_1 is a COT candidate resource set determined by the UE 1 based on a service periodicity of the UE 1. A specific procedure is the same as a resource selection procedure defined in Rel-16, for example, a reservation manner shown in FIG. 6D.

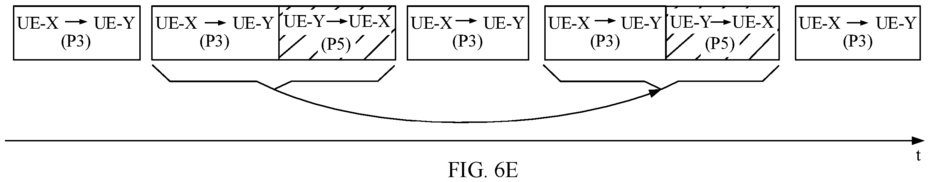

SA'(2) is a candidate resource set determined from the updated first COT candidate resource set SA' based on a COT length of X (L_cot = X) and a corresponding periodicity Y As shown in FIG. 6E, values of X and Y may be flexibly determined based on a configuration.

SA'(n) can be deduced by analogy. All service periodicities in which the UE 1 sends a TB are traversed.

Then, the UE 1 uses an intersection set of the n updated first COT candidate resource sets: SA'(1), SA'(2), ..., and SA'(n) as the final first COT candidate resource set.

It should be noted that, if the intersection set of SA'(1), SA'(2), ..., and SA'(n) is empty, only SA'(1) is selected.

If steps S501 to S504 all may be performed by the physical layer of the UE 1, the physical layer of the UE 1 further reports the final first COT candidate resource set to a MAC layer of the UE 1. Alternatively, steps S501 to S503 are all performed by the physical layer of the UE 1. The physical layer of the UE 1 reports the updated first COT candidate resource set to a MAC layer of the UE 1, and then the MAC layer of the UE 1 performs step S504 to obtain the final first COT candidate resource set. Finally, the MAC layer randomly selects, from the final first COT candidate resource set, a resource for COT transmission.

In another implementation, COT lengths of COT candidate resources in the first COT candidate resource set in steps S501 to S03 in this application are all equal to 1. To be specific, a bottom layer (for example, the physical layer) of the UE 1 may determine the updated first candidate resource set (equivalent to that COT lengths of the first COT candidate resources are all equal to 1) based on a single-slot granularity and a service periodicity. For details, refer to conventional technologies. Finally, the bottom layer (for example, the physical layer) of the UE 1 may exclude, from the updated first candidate resource set, a resource that cannot be used for transmission at a COT granularity, to obtain a final first candidate resource set, and report the final first candidate resource set to a higher layer (for example, the MAC layer) of the UE 1.

According to this specific embodiment, the first terminal device may obtain the final first COT candidate resource, and use the final first COT candidate resource set for sidelink transmission by the first terminal device, to ensure that effective COT transmission is achieved, thereby improving a rate of the sidelink transmission by the first terminal device.

Step S503 in Embodiment 1 may further be implemented in the following manner:

That is, that the UE 1 performs resource exclusion on a first COT candidate resource set based on first COT reservation information and one or more pieces of second COT reservation information, to obtain an updated first COT candidate resource set may further be implemented as follows:

The second COT reservation information indicates resources for third COT transmission, where the resources for the third COT transmission include: transmission resources that are in the resources for the second COT transmission and that overlap with the first COT candidate resources, and resources that are for the second COT transmission and on which transmission resources that are reserved from the resources for the second COT transmission based on the periodicity corresponding to the second COT transmission overlap with the transmission resources that are reserved from the first COT candidate resources based on the periodicity of first COT transmission.

The second COT reservation information includes one or more of the following:

the resources for the third COT transmission; and
a second priority value of each transmission on the resources for the third COT transmission.

The first COT reservation information includes one or more of the following:

the resources for the fourth COT transmission; and
a first priority value of each transmission on the resources for the fourth COT transmission.

The resources for the fourth COT transmission include: first COT candidate resources that overlap with resources for second COT transmission, and first COT candidate resources on which transmission resources that are reserved from the first COT candidate resources based on a periodicity of first COT transmission overlap with transmission resources that are reserved from the resources for the second COT transmission based on a periodicity corresponding to the second COT transmission.

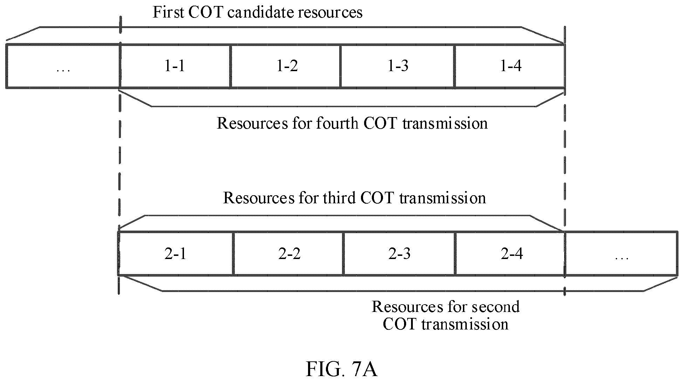

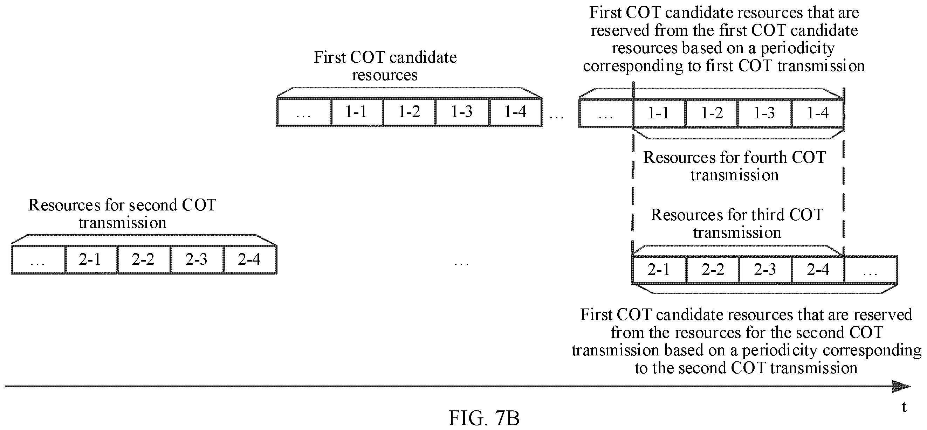

For example, one first COT candidate resource in the first COT candidate resource set and one resource for the second COT transmission in a plurality of resources for the second COT transmission are used as an example. Refer to FIG. 7A and FIG. 7B. The first COT candidate resource overlaps with the resource for the second COT transmission.

The resources for the third COT transmission include: transmission resources (referring to FIG. 7A) that are in the resources for the second COT transmission and that overlap with the first COT candidate resources, and resources (referring to FIG. 7B) that are for the second COT transmission and on which transmission resources that are reserved from the resources for the second COT transmission based on a periodicity corresponding to the second COT transmission overlap with transmission resources that are reserved from the first COT candidate resources based on a periodicity of first COT transmission.

The resources for the fourth COT transmission include: first COT candidate resources (referring to FIG. 7A) that overlap with the resources for the second COT transmission, and first COT candidate resources (referring to FIG. 7B) on which transmission resources that are reserved from the first COT candidate resources based on the periodicity of the first COT transmission overlap with transmission resources that are reserved from the resources for the second COT transmission based on the periodicity corresponding to the second COT transmission.

FIG. 7A is used as an example. If the resources for the third COT transmission that are included in the resources for the second COT transmission include four transmission resources, namely, 2-1, 2-2, 2-3, and 2-4, each transmission resource is a resource occupied for one time of transmission, and second priority values corresponding to four times of transmission are respectively P(2-1), P(2-2), P(2-3), and P(2-4). The second COT reservation information includes a second priority value of each transmission on the resources for the third COT transmission, that is, the second COT reservation information includes P(2-1), P(2-2), P(2-3), and P(2-4).

If the resources for the fourth COT transmission in the first COT candidate resources also include four transmission resources, namely, 1-1, 1-2, 1-3, and 1-4, each transmission resource is a resource occupied for one time of transmission, and first priority values corresponding to four times of transmission are respectively P(1-1), P(1-2), P(1-3), and P(1-4). The first COT reservation information includes a first priority value of each transmission on the resources for the fourth COT transmission, that is, the first COT reservation information includes P(1-1), P(1-2), P(1-3), and P(1-4).

In an implementation, that the first terminal device performs resource exclusion on a first COT candidate resource set based on the first COT reservation information and the one or more pieces of second COT reservation information, to obtain an updated first COT candidate resource set includes: The first terminal device excludes, based on the first COT reservation information and the one or more pieces of second COT reservation information, first COT candidate resources that meet a second condition from the first COT candidate resource set, to obtain the updated first COT candidate resource set.

Optionally, the second condition includes one or more of the following:

A second RSRP measurement value of any transmission resource in the resources for the fourth COT transmission is greater than a corresponding second RSRP threshold, where a second RSRP measurement value of each transmission resource in the resources for the fourth COT transmission is equal to a second RSRP measurement value of a corresponding transmission resource in the resources for the third COT transmission. The second RSRP threshold is determined based on a first priority value of one transmission included in the fourth COT transmission and a second priority value of one corresponding transmission included in the third COT transmission.

For example, the second RSRP measurement value of each transmission resource in the resources for the fourth COT transmission may be determined in the following manner:

FIG. 7A is used as an example. Resources for fourth COT transmission include four transmission resources, namely, 1-1, 1-2, 1-3, and 1-4. Correspondingly, resources for third COT transmission include four transmission resources, namely, 2-1, 2-2, 2-3, and 2-4, and each transmission resource is a resource occupied for one time of transmission. Second RSRP measurement values of the four transmission resources included in the resources for the third COT transmission all may be obtained through measurement, that is, the second RSRP measurement values of the four transmission resources are respectively RSRP(2-1), RSRP(2-2), RSRP(2-3), and RSRP(2-4).

The transmission resources in the resources for the third COT transmission are in one-to-one correspondence with the transmission resources in the resources for the fourth COT transmission. Therefore, the second RSRP measurement value of each transmission resource in the resources for the fourth COT transmission may be determined based on a second RSRP measurement value of each transmission resource in the resources for the third COT transmission. For example, the second RSRP measurement value of each transmission resource in the resources for the fourth COT transmission is equal to a second RSRP measurement value of a corresponding transmission resource in the resources for the third COT transmission. To be specific, it may be determined that a second RSRP measurement value RSRP(1-1) of the transmission resource 1-1 in the resources for the fourth COT transmission is equal to RSRP(2-1), a second RSRP measurement value RSRP(1-2) of the transmission resource 1-2 in the resources for the fourth COT transmission is equal to RSRP(2-2), a second RSRP measurement value RSRP(1-3) of the transmission resource 1-3 in the resources for the fourth COT transmission is equal to RSRP(2-3), and a second RSRP measurement value RSRP(1-4) of the transmission resource 1-4 in the resources for the fourth COT transmission is equal to RSRP(2-4).

For example, the second RSRP threshold corresponding to each transmission resource in the resources for the fourth COT transmission may be determined in the following manner:

According to the foregoing example, it is determined that first priority values of four transmissions on the resources for the fourth COT transmission are respectively P(1-1), P(1-2), P(1-3), and P(1-4), and second priority values of four transmissions on the resources for the third COT transmission are respectively P(2-1), P(2-2), P(2-3), and P(2-4).

In this case, a second RSRP threshold of the 1st transmission resource (1-1) in the resources for the fourth COT transmission is determined as follows:

Based on the first priority value P(1-1) of the 1st transmission resource (1-1) in the resources for the fourth COT transmission and the second priority value P(2-1) of the 1st transmission resource 2-1 in the resources for the third COT transmission, it is determined that a sequence number (a $(1\_cot)^{th}$ value) in a preset threshold list (namely, sl-Thres-RSRP-List) satisfies the following formula (namely, Formula 1 above):

$$(1\_cot)^{th} \text{ value} = P(2\text{-}1) + P(1\text{-}1) * 8$$

The preset threshold list (namely, sl-Thres-RSRP-List) is queried for RSRP1 corresponding to the sequence number being the $(1\_cot)^{th}$ value, and RSRP1 is used as the second RSRP threshold of the 1st transmission resource (1-1) in the resources for the fourth COT transmission.

A second RSRP threshold of the 2nd transmission resource (1-2) in the resources for the fourth COT transmission, a second RSRP threshold of the 3rd transmission resource (1-3) in the resources for the fourth COT transmission, and a second RSRP threshold of the 4th transmission resource (1-4) in the resources for the fourth COT transmission all can be obtained with reference to the manner of determining the second RSRP threshold of the 1st transmission resource (1-1) in the resources for the fourth COT transmission. Details are not described herein again.

Further, the second RSRP measurement value of the 1st transmission resource (1-1) in the resources for the fourth COT transmission is compared with the second RSRP threshold of the 1st transmission resource (1-1), the second RSRP measurement value of the 2nd transmission resource (1-2) in the resources for the fourth COT transmission is compared with the second RSRP threshold of the 2nd transmission resource (1-2), the second RSRP measurement value of the 3rd transmission resource (1-3) in the resources for the fourth COT transmission is compared with the second RSRP threshold of the 3rd transmission resource (1-3), and the second RSRP measurement value of the 4th transmission resource (1-4) in the resources for the fourth COT transmission is compared with the second RSRP threshold of the 4th transmission resource (1-4). If a second RSRP measurement value of any transmission resource in the resources for the fourth COT transmission is greater than a corresponding second RSRP threshold, first COT candidate resources on which the resources for the fourth COT transmission are located are excluded from a first COT candidate resource set.

All other first COT candidate resources in the first COT candidate resource set may be excluded with reference to the foregoing implementations. Details are not described herein again.

In the foregoing implementations, the physical layer of the first terminal device may accurately perform resource exclusion on the first COT candidate resource set, to obtain an updated first COT candidate resource set. Further, according to step S504 in Embodiment 1, resource exclusion may be performed on the updated first COT candidate resource set to obtain a final first COT candidate resource set, and the final first COT candidate resource set is reported to the higher layer (for example, the MAC layer) of the first terminal device. Alternatively, after obtaining the updated first COT candidate resource set, the physical layer of the first terminal device reports the updated first COT candidate resource set to the higher layer of the first terminal device, and the higher layer of the first terminal device further obtains the final first COT candidate resource set according to step S504 in Embodiment 1.

According to the implementation, the first terminal device may use the final first COT candidate resource set for sidelink transmission by the first terminal device, to achieve effective COT transmission. This improves a rate of sidelink transmission by the first terminal device.

A communication apparatus provided in embodiments of this application is described below.

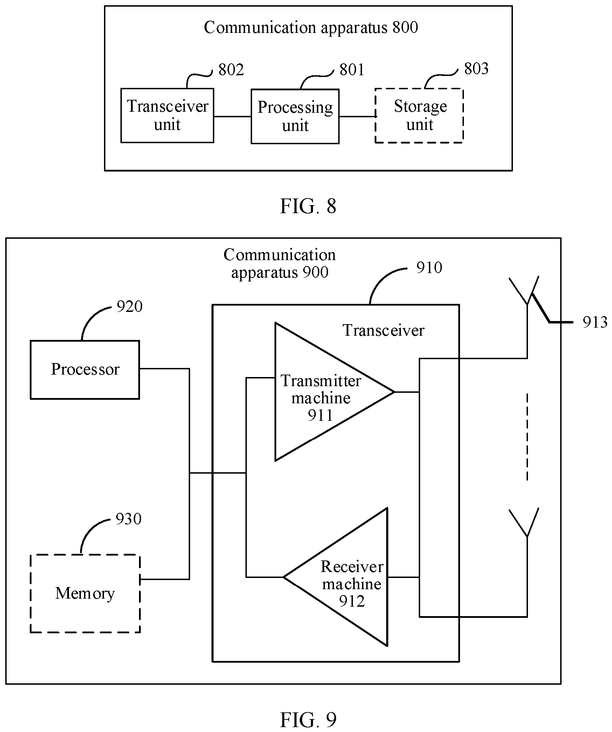

Based on a same technical concept, an embodiment of this application provides a communication apparatus. The communication apparatus may be used in a first terminal device in the method in this application. To be specific, the communication apparatus includes modules or units in one-to-one correspondence with the methods/operations/steps/actions performed by the first terminal device in the foregoing embodiments. The modules or units may be implemented by a hardware circuit, software, or a combination of a hardware circuit and software. The communication apparatus has a structure shown in FIG. 8.

As shown in FIG. 8, the communication apparatus 800 may include a processing unit 801. The processing unit 801 is equivalent to a processing module, and may be used for a process of performing resource exclusion on a first COT candidate resource set based on first COT reservation information and one or more pieces of second COT reservation information, to obtain an updated first COT candidate resource set.

Optionally, the communication apparatus 800 further includes a transceiver unit 802. The transceiver unit 802 may implement a corresponding communication function. Specifically, the transceiver unit 802 may specifically include a receiving unit and/or a sending unit. The receiving unit may be configured to receive information, data, and/or the like, and the sending unit may be configured to send information and/or data. The transceiver unit may also be referred to as a communication interface or a transceiver module. For example, the transceiver unit 802 may be further configured to obtain first channel occupancy time COT reservation information of the first terminal device and one or more pieces of second channel occupancy time COT reservation information of a second terminal device.

Optionally, the communication apparatus 800 may further include a storage unit 803. The storage unit 803 is equivalent to a storage module, and may be configured to store instructions and/or data. The processing unit 801 may read the instructions and/or the data in the storage module, to enable the communication apparatus to implement the foregoing method embodiments.

The communication apparatus 800 may be configured to perform actions performed by the first terminal device in the foregoing method embodiments. The communication apparatus 800 may be a first terminal device or a component that may be disposed in the first terminal device. The transceiver unit 802 is configured to perform a sending-related operation on the first terminal device side in the foregoing method embodiments, and the processing unit 801 is configured to perform a processing-related operation of the first terminal device in the foregoing method embodiments.

Optionally, the transceiver unit 802 may include a sending unit and a receiving unit. The sending unit is configured to perform a sending operation in the foregoing method embodiments. The receiving unit is configured to perform a receiving operation in the foregoing method embodiments.

It should be noted that the communication apparatus 800 may include the sending unit, but does not include the receiving unit. Alternatively, the communication apparatus 800 may include the receiving unit, but does not include the sending unit, specifically depending on whether the foregoing solution performed by the communication apparatus 800 includes sending actions and receiving actions.

In an example, the communication apparatus 800 is configured to perform actions performed by the first terminal device in embodiments shown in FIG. 4 and FIG. 5.

For example, the processing unit 801 is configured to: determine first channel occupancy time COT reservation information of the first terminal device and one or more pieces of second channel occupancy time COT reservation information of a second terminal device; and perform resource exclusion on a first COT candidate resource set based on the first COT reservation information and the one or more pieces of second COT reservation information, to obtain an updated first COT candidate resource set, where the updated first COT candidate resource set is used by the first terminal device and/or a third terminal device for sidelink transmission.

Optionally, the transceiver unit 802 is configured to obtain first channel occupancy time COT reservation information of the first terminal device and one or more pieces of second channel occupancy time COT reservation information of a second terminal device.

It should be understood that a specific process in which the modules perform the foregoing corresponding procedures is described in detail in the foregoing method embodiment. For brevity, details are not described herein again.

The processing unit 801 in the foregoing embodiment may be implemented by at least one processor or a processor-related circuit. The transceiver unit 802 may be implemented by a transceiver or a transceiver-related circuit. The storage unit may be implemented by at least one memory.

This application further provides a communication apparatus. The communication apparatus may be a first terminal device, a processor of the first terminal device, or a chip. The communication apparatus may be configured to perform operations performed by the first terminal device in the foregoing method embodiments.

FIG. 9 is a simplified diagram of a structure of a communication apparatus. As shown in FIG. 9, the communication apparatus 900 includes a processor 920. Optionally, the communication apparatus further includes a transceiver 910 and a memory 930.

The processor 920 may also be referred to as a processing unit, a processing board, a processing module, a processing apparatus, or the like.

The transceiver 910 may also be referred to as a transceiver module, a transceiver unit, a transceiver, a transceiver circuit, a transceiver apparatus, a communication interface, or the like. Optionally, a component that is in the transceiver 910 and that is configured to implement a sending function may be considered as a sending unit or a sending module, and a component that is in the transceiver 910 and that is configured to implement a receiving function may be considered as a receiving unit or a receiving module. To be specific, the transceiver 910 may include a transmitter machine 911, a receiver machine 912, a radio frequency circuit (not shown in the figure), an antenna 913, and an input/output apparatus (not shown in the figure). The transmitter machine 911 sometimes may also be referred to as a transmitter, a transmitting module, a transmitting unit, a transmitting circuit, or the like. The receiver machine 912 sometimes may also be referred to as a receiver, a receiving module, a receiving unit, a receiving circuit, or the like. The radio frequency circuit is mainly configured to: perform conversion between a baseband signal and a radio frequency signal, and process the radio frequency signal. The antenna 913 is mainly configured to send and receive a radio frequency signal in a form of an electromagnetic wave. The input/output apparatus, for example, a touchscreen, a display screen, or a keyboard, is mainly configured to receive data input by a user and output data to a user. It should be noted that some types of communication apparatuses may not have an input/output apparatus.

The memory 930 is mainly configured to store a software program and data.

When data needs to be sent, the processor 920 performs baseband processing on the data to be sent and then outputs a baseband signal to the radio frequency circuit. The radio frequency circuit performs radio frequency processing on the baseband signal, and then sends, via the antenna, a radio frequency signal to the outside in a form of an electromagnetic wave. When data is sent to the communication apparatus, the radio frequency circuit receives the radio frequency signal by using the antenna, converts the radio frequency signal into a baseband signal, and outputs the baseband signal to the processor 920. The processor 920 converts the baseband signal into data and processes the data. For ease of description, FIG. 9 shows only one memory, one processor, and one transceiver. In an actual communication apparatus product, there may be one or more processors and one or more memories. The memory may also be referred to as a storage medium, a storage device, or the like. The memory may be disposed independent of the processor, or may be integrated with the processor. This is not limited in embodiments of this application.

Optionally, the transceiver 910 and the memory 930 may include one or more boards. Each board may include one or more processors and one or more memories. The processor is configured to read and execute a program in the memory to implement a baseband processing function and control of the communication apparatus. If there are a plurality of boards, the boards may be connected to each other, to enhance a processing capability. In an optional implementation, a plurality of boards may alternatively share one or more processors, or share one or more memories, or simultaneously share one or more processors.

When the communication apparatus 900 is used as a first terminal device, the transceiver 910 is mainly configured to implement a transceiver function of the first terminal device. The processor 920 is a control center of the first terminal device, and is configured to control the first terminal device to perform a processing operation on the first terminal device side in the foregoing method embodiments. The memory 930 is mainly configured to store computer program code and data of the first terminal device.

In embodiments of this application, the transceiver that has a transceiver function may be considered as a transceiver unit (a transceiver module) of the first terminal device, and the processor that has a processing function may be considered as a processing unit (a processing module) of the first terminal device.

In an implementation, the processor 920 is configured to perform processing actions on the first terminal device side in embodiments shown in FIG. 4 and FIG. 5, and the transceiver 910 is configured to perform sending and receiving actions on the first terminal device side in FIG. 4 and FIG. 5. For example, the transceiver 910 is configured to perform S401 (which is an optional step) in the embodiment shown in FIG. 4. To be specific, the transceiver obtains first channel occupancy time COT reservation information of the first terminal device and one or more pieces of second channel occupancy time COT reservation information of a second terminal device. The processor 920 is configured to perform a processing operation in S402 in the embodiment shown in FIG. 4, which may be specifically: performing resource exclusion on a first COT candidate resource set based on the first COT reservation information and the one or more pieces of second COT reservation information, to obtain an updated first COT candidate resource set. In addition, the processor 920 is configured to perform a processing operation in S403 in the embodiment shown in FIG. 4, which may be specifically: determining a plurality of updated first COT candidate resource sets, and using an intersection set of the plurality of updated first COT candidate resource sets as a final first COT candidate resource set.

It should be understood that FIG. 9 is merely an example instead of a limitation. The first terminal device including the transceiver unit and the processing unit may not depend on the structure shown in FIG. 9.

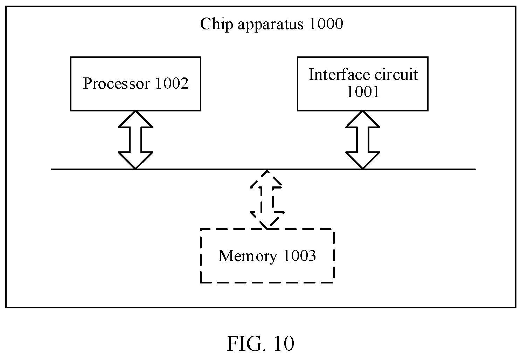

When the first terminal device is a chip, FIG. 10 is a simplified diagram of a structure of a chip apparatus. The chip includes an interface circuit 1001 and a processor 1002. The interface circuit 1001 and the processor 1002 are coupled to each other. It may be understood that the interface circuit 1001 may be a transceiver or an input/output interface, and the processor may be a processing module, microprocessor, or integrated circuit integrated on the chip. The sending operation of the first terminal device in the foregoing method embodiments may be understood as an output of the chip apparatus, and the receiving operation of the first terminal device in the foregoing method embodiments may be understood as an input of the chip apparatus.

Optionally, the chip apparatus 1000 may further include a memory 1003, configured to store instructions to be executed by the processor 1002, or store input data required by the processor 1002 to run instructions, or store data generated after the processor 1002 runs instructions. Optionally, the memory 1003 may alternatively be integrated with the processor 1002.

An embodiment of this application further provides a computer-readable storage medium. The computer-readable storage medium stores computer instructions used to implement the method performed by the first terminal device in the foregoing method embodiments.

For example, when the computer program is executed by a computer, the computer is enabled to implement the method performed by the first terminal device in the foregoing method embodiments.

An embodiment of this application further provides a computer program product including instructions. The instructions are executed by a computer, the computer is enabled to implement the method performed by the first terminal device in the foregoing method embodiments.

An embodiment of this application further provides a communication system. The communication system includes the first terminal device and the one or more second terminal devices in the foregoing embodiments. Optionally, the communication system further includes a third terminal device and a fourth terminal device.

An embodiment of this application further provides a chip apparatus, including a processor. The processor is configured to invoke a computer program or computer instructions stored in a memory, so that the processor performs the resource determining method in embodiments shown in FIG. 4 and FIG. 5.

In a possible implementation, an input of the chip apparatus corresponds to the receiving operation in embodiments shown in FIG. 4 and FIG. 5, and an output of the chip apparatus corresponds to the sending operation in embodiments shown in FIG. 4 and FIG. 5.

Optionally, the processor is coupled to a memory by using an interface.

Optionally, the chip apparatus further includes a memory. The memory stores a computer program or computer instructions.

The processor mentioned anywhere above may be a general-purpose central processing unit, a microprocessor, an application-specific integrated circuit (application-specific integrated circuit, ASIC), or one or more integrated circuits configured to control execution of a program of the resource determining method in embodiments shown in FIG. 4 and FIG. 5. Any memory mentioned above may be a read-only memory (read-only memory, ROM), another type of static storage device that can store static information and instructions, a random access memory (random access memory, RAM), or the like.

It should be noted that for ease and brevity of description, for explanations and beneficial effects of related content of any one of the communication apparatuses provided above, reference may be made to the corresponding method embodiments provided above. Details are not described herein again.

The first terminal device in this application may include a hardware layer, an operating system layer running above the hardware layer, and an application layer running above the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Through descriptions of the foregoing implementations, a person skilled in the art may clearly understand that embodiments of this application may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer. Examples of the computer-readable medium include but are not limited to: a RAM, a ROM, an electrically erasable programmable read only memory (electrically erasable programmable read only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and can be accessed by a computer. In addition, any connection may be properly defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as infrared, radio, and microwave are included in a definition of a medium to which the coaxial cable, the optical fiber and optical cable, the twisted pair, the DSL, or the wireless technologies such as the infrared ray, the radio, and the microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk generally copies data by a magnetic means, and the disc copies data optically by a laser means. The foregoing combination should also be included in the protection scope of the computer-readable medium.

In a word, the foregoing descriptions are merely embodiments of this application and are not intended to limit the protection scope of this application. Any modification, equivalent substitution, and improvement made based on the disclosure of this application shall fall within the protection scope of this application.

## Claims

1. A resource determining method, comprising:

   determining, by a first terminal device, first channel occupancy time COT reservation information of the first terminal device and one or more pieces of second channel occupancy time COT reservation information of a second terminal device; and
   performing, by the first terminal device, resource exclusion on a first COT candidate resource set based on the first COT reservation information and the one or more pieces of second COT reservation information, to obtain an updated first COT candidate resource set, wherein the updated first COT candidate resource set is used by the first terminal device and/or a third terminal device for sidelink transmission.

2. The method according to claim 1, wherein the method further comprises:

   determining, by the first terminal device, the first COT candidate resource set; and

the determining, by the first terminal device, the first COT candidate resource set comprises:
selecting, by the first terminal device from a resource selection window based on a preset time domain and a preset frequency domain, all COT transmission resources that meet the preset time domain and the preset frequency domain as first COT candidate resources, to obtain the first COT candidate resource set.

3. The method according to claim 1, wherein the second COT reservation information indicates resources for second COT transmission, and the resources for the second COT transmission are used by the second terminal device and/or a plurality of fourth terminal devices for sidelink transmission.

4. The method according to claim 1 or 2, wherein the first COT reservation information comprises one or more of the following:

resources for first COT transmission;
a priority value of the first COT transmission; and
a periodicity of the first COT transmission, wherein
the resources for the first COT transmission are used by the first terminal device and/or the one or more third terminal devices for sidelink transmission, the priority value of the first COT transmission is a smallest value in priority values of the transmission by the first terminal device and/or the one or more third terminal devices, and the periodicity of the first COT transmission is determined based on periodicities of the transmission by the first terminal device and/or the one or more third terminal devices.

5. The method according to claim 3, wherein each piece of second COT reservation information comprises one or more of the following:

the resources for the second COT transmission;
a priority value of the second COT transmission; and
a periodicity of the second COT transmission, wherein
the priority value of the second COT transmission is a smallest value in priority values of the transmission by the second terminal device and/or the plurality of fourth terminal devices, and the periodicity of the second COT transmission is determined based on periodicities of the transmission by the second terminal device and/or the plurality of fourth terminal devices.

6. The method according to any one of claims 1 to 5, wherein the performing, by the first terminal device, resource exclusion on a first COT candidate resource set based on the first COT reservation information and the one or more pieces of second COT reservation information, to obtain an updated first COT candidate resource set comprises:
excluding, by the first terminal device based on the first COT reservation information and the one or more pieces of second COT reservation information, first COT candidate resources that meet a first condition from the first COT candidate resource set, to obtain the updated first COT candidate resource set.

7. The method according to claim 6, wherein the first condition is any one or more of the following:

a first RSRP measurement value of the first COT candidate resource is greater than a first RSRP threshold, wherein the first RSRP measurement value of the first COT candidate resource is equal to a first RSRP measurement value of the second COT transmission, and the first RSRP measurement value of the second COT transmission is a largest value in RSRP measurement values of resources that are for the second COT transmission and that overlap with the first COT candidate resources, or the first RSRP measurement value of the second COT transmission is a largest value in RSRP measurement values of all the resources for the second COT transmission; and the first RSRP threshold is determined based on the priority value of the first COT transmission comprised in the first COT reservation information and the priority value of the second COT transmission comprised in the second COT reservation information;
the first COT candidate resources overlap with transmission resources that are reserved by the one or more second terminal devices based on the periodicity corresponding to the second COT transmission; and
transmission resources that are reserved from the first COT candidate resources based on the periodicity of the first COT transmission overlap with the transmission resources that are reserved by the one or more second terminal devices based on the periodicity corresponding to the second COT transmission.

8. The method according to claim 1 or 2, wherein the second COT reservation information is for determining resources for third COT transmission, wherein the resources for the third COT transmission comprise: transmission resources that are in resources for second COT transmission and that overlap with the first COT candidate resources, and/or resources that are for the second COT transmission and on which transmission resources that are reserved from the resources for the second COT transmission based on a periodicity corresponding to the second COT transmission overlap with transmission resources that are reserved from the first COT candidate resources based on a periodicity of first COT transmission.

**9.** The method according to claim 1 or 2, wherein the first COT reservation information is for determining resources for fourth COT transmission, wherein
the resources for the fourth COT transmission comprise: first COT candidate resources that overlap with resources for second COT transmission, and first COT candidate resources on which transmission resources that are reserved from the first COT candidate resources based on a periodicity of first COT transmission overlap with transmission resources that are reserved from the resources for the second COT transmission based on a periodicity corresponding to the second COT transmission.

**10.** The method according to claim 8, wherein the second COT reservation information comprises one or more of the following:

the resources for the third COT transmission; and
a second priority value of each transmission on the resources for the third COT transmission.

**11.** The method according to claim 9, wherein the first COT reservation information comprises one or more of the following:

the resources for the fourth COT transmission; and
a first priority value of each transmission on the resources for the fourth COT transmission.

**12.** The method according to any one of claims 1 and 8 to 11, wherein the performing, by the first terminal device, resource exclusion on a first COT candidate resource set based on the first COT reservation information and the one or more pieces of second COT reservation information, to obtain an updated first COT candidate resource set comprises:
excluding, by the first terminal device based on the first COT reservation information and the one or more pieces of second COT reservation information, first COT candidate resources that meet a second condition from the first COT candidate resource set, to obtain the updated first COT candidate resource set.

**13.** The method according to claim 12, wherein the second condition comprises:

a second RSRP measurement value of any transmission resource in the resources for the fourth COT transmission is greater than a corresponding second RSRP threshold, wherein
a second RSRP measurement value of each transmission resource in the resources for the fourth COT transmission is equal to a second RSRP measurement value of a corresponding transmission resource in the resources for the third COT transmission; and
the second RSRP threshold is determined based on a first priority value of one transmission comprised in the fourth COT transmission and a second priority value of one corresponding transmission comprised in the third COT transmission.

**14.** The method according to claim 6 or 12, wherein the method further comprises:

determining, by the first terminal device, a plurality of updated first COT candidate resource sets, wherein the plurality of updated first COT candidate resource sets are determined from the first COT candidate resources based on a plurality of COT lengths and corresponding COT transmission periodicities, and each updated first COT candidate resource set is determined from the first COT candidate resources based on one COT length and a corresponding COT transmission periodicity; and
using, by the first terminal device, an intersection set of the plurality of updated first COT candidate resource sets as a final first COT candidate resource set.

**15.** A communication apparatus, comprising a unit or module configured to perform the method according to any one of claims 1 to 14.

**16.** A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 14 by using a logic circuit or executing code instructions.

17. A computer program product, comprising a computer program, wherein when the computer program is executed by a communication apparatus, the method according to any one of claims 1 to 14 is implemented.

18. A computer-readable storage medium, wherein the storage medium stores a computer-readable program or instructions, and when the computer program or the instructions are executed by a communication apparatus, the method according to any one of claims 1 to 14 is implemented.

FIG. 1

FIG. 2

Downlink

Uplink

Network device

Sidelink

Terminal device 1    Terminal device 2

Sidelink

Terminal device 3

FIG. 3A

Downlink

Uplink

Network device

Sidelink

Vehicle 1

Vehicle 2

Sidelink

Vehicle 3

FIG. 3B

Display device/Processing device

Sidelink

AR/VR/MR device

FIG. 3C

FIG. 3D

S401: A first terminal device determines first channel occupancy time COT reservation information of the first terminal device and one or more pieces of second channel occupancy time COT reservation information of a second terminal device

↓

S402: The first terminal device performs resource exclusion on a first COT candidate resource set based on the first COT reservation information and the one or more pieces of second COT reservation information, to obtain an updated first COT candidate resource set

↓

S403: The first terminal device determines a plurality of updated first COT candidate resource sets, and uses an intersection set of the plurality of updated first COT candidate resource sets as a final first COT candidate resource set

FIG. 4

S501: A UE 1 obtains SCI of at least one second terminal device

S502: The UE 1 decodes SCI of each second terminal device, to obtain second COT reservation information of a corresponding second terminal device

S503: The UE 1 performs resource exclusion on a first COT candidate resource set based on first COT reservation information and one or more pieces of second COT reservation information, to obtain an updated first COT candidate resource set

S504: The UE 1 determines a plurality of updated first COT candidate resource sets, and uses an intersection set of the plurality of updated first COT candidate resource sets as a final first COT candidate resource set

FIG. 5

| ... | 1-1 | 1-2 | 1-3 | 1-4 |

First COT candidate resources

| 2-1 | 2-2 | 2-3 | 2-4 | ... | 2-N |

Resources for second COT transmission

FIG. 6A

First COT candidate resources

Resources for second COT transmission

···

Transmission resources that are reserved from the resources for the second COT transmission based on a periodicity corresponding to the second COT transmission

t

FIG. 6B

First COT candidate resources

···

Transmission resources that are reserved from the first COT candidate resources based on a periodicity corresponding to first COT transmission

Resources for second COT transmission

···

Transmission resources that are reserved from the resources for the second COT transmission based on a periodicity corresponding to the second COT transmission

t

FIG. 6C

| UE-X → UE-Y (P3) | UE-X → UE-Y (P3) | UE-Y→UE-X (P5) | UE-X → UE-Y (P3) | UE-X → UE-Y (P3) | UE-Y→UE-X (P5) | UE-X → UE-Y (P3) |

t

FIG. 6D

| UE-X → UE-Y (P3) | UE-X → UE-Y (P3) | UE-Y→UE-X (P5) | UE-X → UE-Y (P3) | UE-X → UE-Y (P3) | UE-Y→UE-X (P5) | UE-X → UE-Y (P3) |
|---|---|---|---|---|---|---|

t

FIG. 6E

First COT candidate resources

| ... | 1-1 | 1-2 | 1-3 | 1-4 |

Resources for fourth COT transmission

Resources for third COT transmission

| 2-1 | 2-2 | 2-3 | 2-4 | ... |

Resources for second
COT transmission

FIG. 7A

First COT candidate resources that are reserved from the first COT candidate resources based on a periodicity corresponding to first COT transmission

First COT candidate resources

| ... | 1-1 | 1-2 | 1-3 | 1-4 |

... 

| ... | 1-1 | 1-2 | 1-3 | 1-4 |

Resources for fourth COT transmission

Resources for second COT transmission

Resources for third COT transmission

| ... | 2-1 | 2-2 | 2-3 | 2-4 |

...

| 2-1 | 2-2 | 2-3 | 2-4 | ... |

First COT candidate resources that are reserved from the resources for the second COT transmission based on a periodicity corresponding to the second COT transmission

FIG. 7B

t

EP 4 513 958 A1

Communication apparatus 800

802    801    803

Transceiver
unit

Processing
unit

Storage
unit

FIG. 8

Communication
apparatus 900    910

920

Transceiver

Processor

Transmitter
machine
911

913

930

Receiver
machine
912

Memory

FIG. 9

FIG. 10

## INTERNATIONAL SEARCH REPORT

| International application No. |
|---|
| **PCT/CN2023/088760** |

### A. CLASSIFICATION OF SUBJECT MATTER

H04W 28/26(2009.01)i

According to International Patent Classification (IPC) or to both national classification and IPC

### B. FIELDS SEARCHED

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, ENTXTC, ENTXT, WPI, 3GPP: mode-2, mode 2, SCI, 资源, 候选, 预留, 信道占用时间, COT, 重叠, 重复, 排除, 去除, 去重, 侧行, 侧链, 副链, SL, 优先, RSRP, source, reserv+, channel occupancy time, exclud+, remov+, repeat, sidelink, priority

### C. DOCUMENTS CONSIDERED TO BE RELEVANT

| Category* | Citation of document, with indication, where appropriate, of the relevant passages | Relevant to claim No. |
|---|---|---|
| Y | WO 2022077519 A1 (HUAWEI TECHNOLOGIES CO., LTD.) 21 April 2022 (2022-04-21) description, page 13, line 35-page 18, line 37 | 1-18 |
| Y | US 2020037343 A1 (SAMSUNG ELECTRONICS CO., LTD.) 30 January 2020 (2020-01-30) description, paragraphs 152-206 | 1-18 |
| Y | US 2022070925 A1 (QUALCOMM INC.) 03 March 2022 (2022-03-03) claims 25-26, and description, paragraph 183 | 1-18 |
| Y | WO 2020191769 A1 (GUANGDONG OPPO MOBILE COMMUNICATIONS CO., LTD.) 01 October 2020 (2020-10-01) description, page 5, line 5-page 8, line 33 | 1-18 |
| Y | WO 2022061776 A1 (GUANGDONG OPPO MOBILE COMMUNICATIONS CO., LTD.) 31 March 2022 (2022-03-31) description, page 5, line 17-page 8, line 35 | 1-18 |
| A | US 2022095117 A1 (QUALCOMM INC.) 24 March 2022 (2022-03-24) entire document | 1-18 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 July 2023** | **06 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/088760** |

| C. | DOCUMENTS CONSIDERED TO BE RELEVANT | |
|---|---|---|
| Category* | Citation of document, with indication, where appropriate, of the relevant passages | Relevant to claim No. |
| A | NOKIA et al. "Maintenance for Resource allocation for sidelink - Mode 2" *3GPP TSG RAN WG1#104b-e R1-2103765,* 20 April 2021 (2021-04-20), entire document | 1-18 |

Form PCT/ISA/210 (second sheet) (July 2022)

**INTERNATIONAL SEARCH REPORT**
Information on patent family members

International application No.

**PCT/CN2023/088760**

| Patent document cited in search report | | | Publication date (day/month/year) | Patent family member(s) | | | Publication date (day/month/year) |
|---|---|---|---|---|---|---|---|
| WO | 2022077519 | A1 | 21 April 2022 | None | | | |
| US | 2020037343 | A1 | 30 January 2020 | WO | 2020022781 | A1 | 30 January 2020 |
| | | | | KR | 20210024191 | A | 04 March 2021 |
| US | 2022070925 | A1 | 03 March 2022 | None | | | |
| WO | 2020191769 | A1 | 01 October 2020 | CN | 112997551 | A | 18 June 2021 |
| WO | 2022061776 | A1 | 31 March 2022 | CN | 115702583 | A | 14 February 2023 |
| US | 2022095117 | A1 | 24 March 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210474683